# EUROPÄISCHE PATENTSCHRIFT

(11) **EP 3 626 327 B1**
(45) Veröffentlichungstag und Bekanntmachung des Hinweises auf die Patenterteilung: **01.11.2023**
(21) Anmeldenummer: 18020452.1
(22) Anmeldetag: 19.09.2018
(51) Int. Cl.: B01D 53/047, B01D 53/22, F25B 9/04, B01J 19/14

(54) **INERTISIERUNGSVERFAHREN UND INERTISIERUNGSANLAGE, INSBESONDERE ZUR BRANDVERMEIDUNG, SOWIE VERWENDUNG EINER INERTISIERUNGSANLAGE**
INERTISATION METHOD AND INERTISATION SYSTEM, IN PARTICULAR FOR PREVENTING FIRES, AND USE OF AN INERTISATION SYSTEM
PROCÉDÉ D'INERTISATION ET INSTALLATION D'INERTISATION, EN PARTICULIER DESTINÉS À LA PRÉVENTION DES INCENDIES, ET UTILISATION D'UNE INSTALLATION D'INERTISATION

(43) Veröffentlichungstag der Anmeldung: 25.03.2020
(73) Patentinhaber: Wagner Group GmbH, 30853 Langenhagen (DE)
(72) Erfinder: Vroemen, Marc, 30855 Langenhagen (DE)
(74) Vertreter: Götz, Georg Alois

(56) Entgegenhaltungen:
- EP-A1- 1 913 979
- EP-A1- 2 942 503
- CN-U- 206 709 497
- DE-A1-102009 005 156
- US-A- 5 846 291
- US-A1- 2011 011 264

## Beschreibung

Die Erfindung betrifft ein Inertisierungsverfahren zur Durchführung in einer erfindungsgemäßen Inertisierungsanlage, insbesondere zur Brandvermeidung, wobei ein reaktionsträger, insbesondere schwerentzündlicher Produktgasstrom ausgehend von einem Gasgemischstrom, nämlich Umgebungsluft erzeugt wird, welcher Gasgemischstrom zumindest einen Reaktivgasbestandteil, d. h. einen reaktionsfreudigen, insbesondere leichtentzündlichen Volumenanteil, nämlich Sauerstoff und einen Inertgasbestandteil, d. h. einen reaktionsträgen, insbesondere schwerentzündlichen Volumenanteil, nämlich Stickstoff jeweils bezogen auf das Gesamtvolumen des Gasgemischstroms, enthält. Der Gasgemischstrom wird mindestens einer Gastrennungseinheit unter Druckbeaufschlagung zugeführt und der Reaktivgasbestandteil zumindest teilweise mittels eines Trennmittels von dem Gasgemischstrom getrennt. Von dem Gasgemischstrom nicht getrennte und/oder nicht trennbare Gasbestandteile werden der mindestens einen Gastrennungseinheit als Produktgasstrom entnommen. Die von dem Gasgemischstrom getrennten Reaktivgasbestandteile werden der mindestens einen Gastrennungseinheit als Nebenproduktgasstrom entnommen.

Ferner betrifft die Erfindung eine Inertisierungsanlage (auch als Sauerstoffreduzierungsanlage bezeichnet) zur Erzeugung und Bereitstellung eines reaktionsträgen, insbesondere schwerentzündlichen Produktgasstroms, insbesondere zur Durchführung eines erfindungsgemäßen Inertisierungsverfahrens. Die Inertisierungsanlage umfasst eine oder mehrere Gastrennungseinheiten, welche jeweils mit einer Gasgemischleitung zur Zuführung eines Gasgemischstroms in Leitungsverbindung stehen und fluidleitend verbindbar sind. Der Gasgemischstrom enthält zumindest einen Reaktivgasbestandteil, nämlich Sauerstoff und einen Inertgasbestandteil, nämlich Stickstoff. Die eine oder mehreren Gastrennungseinheiten weisen ein zur Trennung des Reaktivgasbestandteils von dem Gasgemischstrom geeignetes Trennmittel auf und sind zur Trennung des Reaktivgasbestandteils von dem Gasgemischstrom mit einem Druck beaufschlagbar. Ferner stehen die eine oder die mehreren Gastrennungseinheiten mit einer Produktgasleitung zur Entnahme eines Produktgasstroms und mit einer Nebenproduktgasleitung zur Entnahme eines Nebenproduktgasstroms in Leitungsverbindung und sind fluidleitend mit dieser verbindbar. Der Produktgasstrom enthält die von dem Gasgemischstrom nicht getrennten und/oder nicht trennbaren Gasbestandteile, der Nebenproduktgasstrom die von dem Gasgemischstrom getrennten Reaktivgasbestandteile.

Schließlich betrifft die Erfindung die Verwendung einer Inertisierungsanlage, insbesondere einer erfindungsgemäßen Inertisierungsanlage, zur Inertisierung einer Kühlumgebung, wobei die Inertisierungsanlage zur Erzeugung und Bereitstellung eines unter den in der Kühlumgebung vorgegebenen Umgebungsbedingungen eine geringe Reaktivität aufweisenden, reaktionsträgen, insbesondere schwerentzündlichen Produktgasstroms, insbesondere zur Durchführung eines erfindungsgemäßen Inertisierungsverfahrens eine oder mehrere Gastrennungseinheiten aufweist, die mit einer Produktgasleitung zur Entnahme des Produktgasstroms in Leitungsverbindung stehen.

Gastrennungsverfahren und zugehörige Gastrennungsanlagen werden in einem weiten technischen Feld zur Trennung von Gasgemischen, d. h. zur Zerlegung der Gasgemische in deren einzelne Bestandteile eingesetzt. Hierbei werden zumeist unterschiedliche physikalische Eigenschaften der einzelnen Gasbestandteile ausgenutzt. So lassen sich Gasgemische beispielsweise im Membranverfahren aufgrund unterschiedlicher Molekülgröße der Einzelgase zerlegen oder bei der Gasverflüssigung und -trennung nach Linde aufgrund ihrer unterschiedlichen Siedepunkte.

Ein Membrantrennungsverfahren ist aus der Offenlegungsschrift US 5,846,291 A1 und ein Gastrennungsverfahren, welches auf unterschiedlicher Permeabilität von Sauerstoff und Stickstoff durch einen sauerstoffangereicherten Film basiert, aus der Offenlegungsschrift EP 2 942 503 A1 bekannt.

Ein Gasverflüssigungsverfahren, bei welchem das Gas mittels Kompressoren auf einen hohen Druck verdichtet und anschließend auf eine ausreichend niedrige Temperatur gekühlt wird um dieses teilweise zu verflüssigen und anschließend durch Entspannung zu trennen, ist beispielsweise aus der US 3,775,998 bekannt. Die hierin beschriebene Gasverflüssigung beruht auf dem Ranque-Effekt und wird mittels eines Wirbelrohrs erzielt. Der bereits auf einen hohen Druck verdichtete Gasstrom wird in das zylindrische Wirbelrohr tangential eingeleitet und in schnelle Rotation versetzt, wobei der radial äußere Bereich des verwirbelten Gasstroms eine höhere Temperatur aufweist als der radial innenliegende Bereich. An den jeweiligen axialen Enden des Wirbelrohrs lassen sich somit ein Gasstrom höherer Temperatur und ein Gasstrom niedrigerer Temperatur entnehmen. Zugleich wird ein Teil des eingeleiteten Gases kondensiert, d.h. verflüssigt. Das offenbarte Wirbelrohr eignet sich demnach zur Trennung eines Gasgemischs, beispielsweise kann Luft durch Verflüssigung in ihre einzelnen Bestandteile zerlegt werden, um Sauerstoff als Produktgas und Stickstoff als Nebenprodukt zu erhalten.

Bei Inertisierungs- bzw. Sauerstoffreduzierungsverfahren wird hingegen Stickstoff als Produktgas und Sauerstoff als Nebenprodukt erzeugt. Bekannte Anwendungsbeispiele bei welchen der abgetrennte Stickstoffanteil Verwendung findet, sind zum Beispiel das sogenannte Hypoxietraining, bei welchem der Sauerstoffgehalt in einem umschlossenen Raum zur Herstellung künstlicher Höhenbedingungen durch Einleitung von stickstoffangereicherter Luft reduziert wird, oder eine sauerstoffarme Lagerung von Lebensmitteln unter einer Controlled Atmosphere (CA), in der u. a. der prozentual anteilige Luftsauerstoff geregelt wird, um den Alterungsprozess leichtverderblicher Ware zu verlangsamen.

Insbesondere im Bereich des Brandschutzes haben sich zur Brandvermeidung sowie zur Brandbekämpfung durch Inertisierung unter anderem Gastrennungsverfahren durchgesetzt, welche entweder auf unterschiedlichen Adsorptionseigenschaften oder auf molekülgrößenbedingter Unterschiede der Diffusionsgeschwindigkeiten der im Gasgemisch enthaltenen Bestandteile beruhen. Mittels Adsorption an einem Adsorbens oder mittels Diffusion durch eine Membran kann beispielsweise Sauerstoff als reaktionsfreudiger und leichtentzündlicher Gasbestandteil aus zugeführter Umgebungsluft abgetrennt und der verbleibende Stickstoff als reaktionsträger und schwerentzündlicher Gasbestandteil, einer Umgebung, d.h. einem Schutzbereich oder umschlossenen Raum zugeführt werden. Als reaktionsträge bezeichnet man im Allgemeinen Stoffe mit einer geringen Reaktivität unter vorgegebenen Umgebungsbedingungen. So ist beispielsweise Stickstoff unter Normalbedingungen reaktionsträge und schwer entzündlich, wohingegen Sauerstoff eine hohe Reaktivität aufweist, d.h. reaktionsfreudig, insbesondere leichtentzündlich ist. Durch die Zufuhr von Stickstoff erhöht sich das in der Umgebung vorliegende Stickstoff/Sauerstoffverhältnis der Umgebungsluft, welches unter Normalbedingungen etwa 78 Vol-% Stickstoff und 21 Vol-% Sauerstoff beträgt. Im Regelfall wird der Sauerstoffgehalt zur Inertisierung einer Umgebung und somit zur Brandvermeidung auf einen Wert zwischen 15-17 Vol-% und in Ausnahmefällen sogar auf einen Wert zwischen 12-14 Vol-% abgesenkt. Bei einem derart abgesenkten Sauerstoffgehalt können sich die meisten brennbaren Materialien nicht mehr entzünden. Gleichzeitig ist die Atmosphäre für Mensch und Tier ungefährlich, solange längere Aufenthalte innerhalb der inertisierten Umgebung vermieden werden. Auf die Verwendung eines reaktionsträgen Produktgases als Schutzgas zur Inertisierung einer Umgebung bzw. von umschlossenen Räumen, wird zur Brandverhütung und Brandbekämpfung daher zumeist im EDV-Bereich bei elektrischen Schalt- und Verteilerräumen sowie in Lagerbereichen mit hochwertigen Wirtschaftsgütern, aber auch im Lagerbereich für Tiefkühlgüter zurück gegriffen.

Um das für die Inertisierung erforderliche Schutzgas bereitzustellen, wird beispielsweise mittels des auf Adsorption beruhenden Gastrennungsverfahrens ein reaktionsträges, insbesondere schwerentzündliches Produktgas erzeugt. Hierzu wird das Gasgemisch, zweckmäßigerweise Umgebungsluft, einer Adsorptionseinheit zugeführt. Die Adsorptionseinheit ist als Behälter, insbesondere Festbettreaktor, ausgeführt und beinhaltet das Adsorbens, bei welchem es sich beispielsweise um Zeolithe oder Aktivkohle handeln kann. Zur Einleitung der Adsorptionsphase, in welcher der reaktionsfreudige, insbesondere leichtentzündliche Gasbestandteil Sauerstoff adsorbiert wird und die übrigen reaktionsträgen, insbesondere schwerentzündlichen Gasbestandteile, im Speziellen Stickstoff, entnommen werden, wird die Umgebungsluft unter Druck der Adsorptionseinheit zugeführt . Zur Einleitung der Desorptionsphase, manchmal auch Regenerationsphase genannt, in welcher der adsorbierte Sauerstoff zur Regeneration des Adsorbens desorbiert und der Adsorptionseinheit entnommen wird, wird der in dieser anliegende Druck wieder auf Umgebungsdruck oder darunter abgesenkt. Auch wenn zur Durchführung eines auf Adsorption beruhenden Gastrennungsverfahrens aus dem Stand der Technik durchaus Anlagen mit einer einzelnen Adsorptionseinheit, welche unter Zuhilfenahme eines Pufferbehälters bzw. Zwischenspeichers abwechselnd adsorbiert und desorbiert bekannt sind, hat sich eine Verfahrensführung mit zwei Adsorptionseinheiten, die sogenannte Druckwechsel-Adsorption als zweckmäßig erwiesen.

Eine Inertisierungsanlage mit einem Gas-Separationssystem, zur Bereitstellung von Stickstoff unter Durchführung einer Druckwechsel-Adsorption ist in der EP 2 801 392 B1 offenbart. Hierbei wird Umgebungsluft unter Druck abwechselnd zwei Adsorptions-Behältern, zugeführt, wobei der Sauerstoff am darin enthaltenen Adsorbens adsorbiert und stickstoffangereicherte Luft entnommen wird. Sobald das Adsorbens gesättigt ist, wird auf den anderen Behälter umgeschaltet und der bisherige Adsorptions-Behälter durch Drucksenkung und Entlüften regeneriert. Die Adsorptionseinheiten durchlaufen zyklusartig eine Adsorptionsphase sowie eine Desorptions- bzw. Regenerationsphase. Zur Optimierung der Effizienz des Gas-Separationssystems ist es vorteilhaft, wenn das Anfangs-Gasgemisch mit einer Temperatur von 15°C bis 25 °C zugeführt wird. Bei der Adsorption handelt es sich zudem um einen exothermen Prozess, sodass der zur Inertisierung verwendete Stickstoff zumeist eine Temperatur oberhalb der üblichen Umgebungstemperatur, welche oftmals zwischen 20°C und 25°C angegeben wird, aufweist. Dies ist bei der Inertisierung einer Kühlumgebung, d.h. einer zur Kühlung vorgesehenen Umgebung, deren Temperatur unterhalb der üblichen Umgebungstemperatur liegt, wie beispielsweise einem Serverraum, oder deren Temperatur sogar unterhalb des Gefrierpunkts liegt, wie bspw. einem Tiefkühllager, welches zweckmäßigerweise bei 18°C oder tiefer betrieben wird, nachteilig. Bei Einleitung des wärmeren Inertgases, insbesondere Stickstoffs in die kältere Umgebung ist folglich zusätzliche Energie zur Aufbringung der erforderlichen Kühlleistung erforderlich. Während der Desorptions- bzw. Regenerationsphase desorbiert der im Adsorbens enthaltene Sauerstoff und kann der jeweiligen Adsorptionseinheit entnommen werden. Gemäß Druckgeräterichtlinie 2014/68/EU gelten sauerstoffführende Leitungen als gefährlich und brandfördernd und unterliegen daher besonderen Schutzvorschriften, wodurch wiederum erhöhte Kosten für die entsprechenden Gasleitungen zur Abfuhr der sauerstoffangereicherten Luft entstehen.

Eine Aufgabe der vorliegenden Erfindung ist es daher ein gegenüber dem Stand der Technik verbessertes Inertisierungsverfahren und eine verbesserte Inertisierungsanlage zur Erzeugung und Bereitstellung eines reaktionsträgen, insbesondere schwerentzündlichen Produktgasstroms anzugeben, welches bzw. welche eine effizientere Inertisierung einer temperierten Umgebung ermöglicht und zusätzliche Verwendungsmöglichkeiten des Produktgasstroms vorsieht.

Erfindungsgemäß wird die Aufgabe durch ein Inertisierungsverfahren nach Anspruch 1, eine Inertisierungsanlage nach Anspruch 8 und die Verwendung einer Inertisierungsanlage nach Anspruch 13 gelöst.

Ein erfindungsgemäßes Inertisierungsverfahren der eingangs näher bezeichneten Art kennzeichnet sich dadurch, dass der der mindestens einen Gastrennungseinheit entnommene Produktgasstrom in ein Wirbelrohr eingeleitet, innerhalb des Wirbelrohrs in einen warmen Produktgasteilstrom und in einen kalten Produktgasteilstrom geteilt und/oder getrennt wird, und der warme und/oder der kalte Produktgasteilstrom vollständig oder teilweise und/oder zeitweise in eine Umgebung eingeleitet wird oder werden. Erfindungsgemäß handelt es bei der Umgebung um einen umschlossenen Raum, wobei der warme und/oder der kalte Produktgasteilstrom vollständig oder teilweise und/oder zeitweise entweder mit einer der in dem umschlossenen Raum vorliegenden Umgebungstemperatur entsprechenden oder wahlweise mit einer zur Kühlung oder Erwärmung des umschlossenen Raums beitragenden Temperatur in den umschlossenen Raum zur Regelung der Umgebungstemperatur und zu dessen Inertisierung eingeleitet wird.

Erfindungsgemäß wird als Gasgemischstrom Umgebungsluft verwendet, deren Reaktivgasbestandteil Sauerstoff und deren Inertgasbestandteil Stickstoff ist.

Gemäß der Erfindung ist also vorgesehen, den aus der mindestens einen Gastrennungseinheit entnommenen Produktgasstrom mittels eines Wirbelrohrs zu temperieren bzw. zu kühlen oder zu erwärmen, indem der Produktgasstrom, vorzugsweise radial oder tangential, über einen Gaseinlass in ein Wirbelrohr eingeleitet und darin in einen warmen und einen kalten Produktgasteilstrom geteilt wird. Der warme Produktgasteilstrom kann an einem axial angeordneten Warmgasauslass des Wirbelrohrs entnommen werden und ist wärmer, weist also eine höhere Temperatur auf, als der in das Wirbelrohr eingeleitete Produktgasstrom. Der kalte Produktgasteilstrom wird an einem dem Warmgasauslass axial gegenüberliegenden Kaltgasauslass entnommen und ist kälter, weist also eine geringere Temperatur auf, als der in das Wirbelrohr eingeleitete Produktgasstrom. Folglich ist auch der warme Produktgasteilstrom wärmer als der kalte Produktgasteilstrom, wohingegen der kalte Produktgasteilstrom kälter ist als der warme Produktgasteilstrom.

Vorzugsweise weist der entnommene Produktgasstrom einen gegenüber dem Gasgemischstrom erhöhten Inertgasbestandteil und der entnommene Nebenproduktgasstrom einen gegenüber dem Gasgemischstrom erhöhten Reaktivgasbestandteil auf. Zur Inertisierung der Umgebung, bei welcher es sich um einen umschlossenen Raumhandelt, wird der reaktionsträge, insbesondere schwerentzündliche Produktgasstrom, wahl- und bedarfsweise in Form des warmen und/oder des kalten Produktgasteilstroms in die Umgebung eingeleitet, wodurch ein in der Umgebung vorliegender Reaktivgasbestandteil, insbesondere Sauerstoffanteil reduziert wird. Je nach Inertisierungsgrad der Umgebung bzw. je nach vorliegendem Sauerstoffgehalt ist es auch denkbar, zeitweise überhaupt keinen Produktgasstrom, d.h. weder den warmen noch den kalten Produktgasteilstrom in die Umgebung einzuleiten, um beispielsweise ein vorgegebenes Sauerstoff-Mindestniveau nicht zu unterschreiten. Ebenso ist es natürlich auch vorgesehen, zumindest zeitweise beide Produktgasteilströme der Umgebung zuzuführen, wodurch gerade zu Beginn des Inertisierungsvorgangs eine raschere Inertisierung durchführbar ist.

Zur Teilung des Produktgasstroms in den warmen Produktgasteilstrom und den kalten Produktgasteilstrom ist ein Wirbelrohr in einer Produktgasleitung, zwischen einem Produktgasauslass der mindestens einen Gastrennungseinheit Adsorptionseinheit und der Umgebung angeordnet. Entweder entspricht die Temperatur des warmen Produktgasteilstroms und/oder die Temperatur des kalten Produktgasteilstroms der in der Umgebung vorliegenden Temperatur, sodass die Einleitung des jeweiligen Produktgasteilstroms die Temperatur der Umgebung nicht verändert. Alternativ liegt die Temperatur des warmen Produktgasteilstroms oberhalb und/oder die Temperatur des kalten Produktgasteilstroms unterhalb der in der Umgebung vorliegenden Temperatur, sodass durch Einleitung des jeweiligen Produktgasteilstroms eine entsprechende Temperierung der Umgebung unterstützt wird bzw. eine Regelung der Umgebungstemperatur möglich ist. Gegenüber bekannten Inertisierungsverfahren, kann der zur Inertisierung vorgesehene reaktionsträge, insbesondere schwerentzündliche Produktgasstrom mit einer der vorliegenden Umgebungstemperatur entsprechenden Temperatur in die Umgebung eingeleitet werden oder sogar wahlweise zur Kühlung oder Erwärmung der Umgebung beitragen. Auf diese Weise lässt sich sonst zur Beheizung bzw. Kühlung der Umgebung notwendige Energie einsparen, wodurch das erfindungsgemäße Inertisierungsverfahren eine höhere Effizienz aufweist und somit kostengünstiger ist.

Weitere Beispiele zur Anwendung des erfindungsgemäßen Inertisierungsverfahrens sind z. B. das eingangs genannte Hypoxietraining oder die sauerstoffarme Lagerung leicht verderblicher Lebensmittel.

Das erfindungsgemäße Inertisierungsverfahren ist grundsätzlich auf alle zur Trennung von Gasgemischen geeigneten Verfahren anwendbar, nachfolgend soll die Erfindung jedoch zunächst anhand eines Adsorptionsverfahrens und anschließend anhand eines Membranverfahrens näher erläutert werden, welche sich als besonders zweckmäßig herausgestellt haben.

Bei einem Adsorptionsverfahren findet die Trennung des Gasgemischstroms in zwei zeitlich aufeinanderfolgenden Phasen, einer Adsorptionsphase und einer Desorptionsphase, manchmal auch als Regenerationsphase bezeichnet, statt. In der Adsorptionsphase wird der Gasgemischstrom mindestens einer Gastrennungseinheit, in diesem Fall einer Adsorptionseinheit, unter Druckbeaufschlagung zugeführt und der Reaktivgasbestandteil zumindest teilweise mittels des Trennmittels getrennt. Als Trennmittel dient hier ein in der mindestens einen Adsorptionseinheit enthaltenes Adsorbens, an welches der Reaktivgasbestandteil zumindest teilweise adsorbiert. Die in der Adsorptionsphase nicht adsorbierten und/oder nicht adsorbierenden Gasbestandteile des Gasgemischstroms werden der mindestens einen Adsorbtionseinheit als Produktgasstrom entnommen. In der Desorptionsphase werden die adsorbierten Reaktivgasbestandteile unter Druckabsenkung von dem Adsorbens desorbiert und der mindestens einen Adsorptionseinheit als Nebenproduktgasstrom entnommen.

In Weiterbildung dieser zweckmäßigen Anwendung des erfindungsgemäßen Verfahrens, werden die Adsorptionsphase und die Desorptions- und/oder Regenerationsphase zeitgleich, parallel innerhalb mindestens einer jeweiligen Adsorptionseinheit durchgeführt.

Bei dieser sogenannten Druckwechsel-Adsorption findet ein zyklisches Umschalten zwischen der Adsorptionsphase und der Desorptions- und/oder Regenerationsphase innerhalb einer Adsorptionseinheit statt. Üblicherweise werden zwei parallel geschaltete Adsorptionseinheiten verwendet, sodass wechselweise eine erste Adsorptionseinheit eine Absorptionsphase durchläuft, während sich eine zweite Adsorptionseinheit in der Desorptions- und/oder Regenerationsphase befindet. Nach Durchführung eines Druckwechsels beispielsweise über Stellventile befindet sich dann die zweite Adsorptionseinheit in der Absorptionsphase und die erste Adsorptionseinheit durchläuft die Desorptions- und/oder Regenerationsphase. Hierbei wird der Gasgemischstrom zur zumindest teilweisen Adsorption des Reaktivgasbestandteils wechselweise unter Druckbeaufschlagung der ersten oder der zweiten, die Adsorptionsphase durchlaufenden, Adsorptionseinheit zugeführt und der Produktgasstrom wechselweise dieser, und der Nebenproduktgasstrom unter Druckabsenkung wechselweise der jeweils anderen, in der Desorptionsphase befindlichen, ersten oder zweiten Adsorptionseinheit entnommen. Hierdurch kann ein kontinuierlicher Produktgasstrom und Nebenproduktgasstrom auch ohne Pufferbehälter sichergestellt werden.

In Weiterbildung dieser Variante wird vorzugsweise zwischen jedem Wechsel der Adsorptionsphase und der Desorptions- und/oder Regenerationsphase eine Druckausgleichsphase durchgeführt.

Zur Durchführung der Druckausgleichsphase werden die erste Adsorptionseinheit und die zweite Adsorptionseinheit fluidleitend miteinander verbunden, wobei der Gasgemischstrom zum Ausgleich des innerhalb der ersten Adsorptionseinheit und innerhalb der zweiten Adsorptionseinheit anliegenden Drucks zwischen der ersten Adsorptionseinheit und der zweiten Adsorptionseinheit strömt bzw. zirkuliert. Um die beiden Adsorptionseinheiten fluidleitend miteinander zu verbinden werden bereits bestehende, zwischen den beiden Adsorptionseinheiten direkt verlaufende Leitungsverbindungen beispielsweise über Stellventile freigeschaltet, wohingegen Zufuhr- und Abfuhrleitungen, wie die Gasgemischleitung, die Produktgasleitung und/oder die Nebenproduktgasleitung, vorzugsweise ebenfalls über Stellventile getrennt werden, sodass diese nicht länger fluidleitend mit den Adsorptionseinheiten verbunden sind. Durch ein derartiges Umschalten oder Umstellen wird die Druckausgleichsphase automatisch eingeleitet, indem der Druckunterschied zwischen den beiden Adsorptionseinheiten eine automatische Strömung von der Adsorptionseinheit mit höherem Druck zu der Adsorptionseinheit mit niedrigerem Druck indiziert.

Von dem zuvor beschriebenen (Druckwechsel-)Adsorptionsverfahren unterscheidet sich das ebenfalls zur Durchführung des erfindungsgemäßen Inertisierungsverfahrens geeignete Membranverfahren im Wesentlichen dadurch, dass die Trennung des Gasgemischstroms kontinuierlich, also unabhängig von zeitlich aufeinanderfolgenden Phasen, erfolgt. Das Trennungsprinzip beruht hier auf der unterschiedlichen Molekülgröße der einzelnen Bestandteile des Gasgemischstroms. Als Trennmittel wird eine Membran verwendet, wobei Gasbestandteile mit einer geringeren Molekülgröße eine höhere Diffusionsgeschwindigkeit aufweisen, also schneller durch die Membran diffundieren, als Gasbestandteile mit einer höheren Molekülgröße, welche entsprechend langsamer oder überhaupt nicht durch die Membran diffundieren.

Der Gasgemischstrom wird mindestens einer Gastrennungseinheit, in diesem Fall einem Membranmodul unter Druckbeaufschlagung zugeführt und der Reaktivgasbestandteil zumindest teilweise mittels des Trennmittels getrennt. Als Trennmittel dient hier eine in dem mindestens einen Membranmodul enthaltene Membran, durch welche der Reaktivgasbestandteil diffundiert, d. h. von dem Gasgemischstrom getrennt wird. Nicht diffundierte und/oder nicht diffundierende Gasbestandteile des Gasgemischstroms werden dem mindestens einen Membranmodul als Produktgasstrom entnommen. Der diffundierte, von dem Gasgemischstrom getrennte, Reaktivgasbestandteil wird dem mindestens einen Membranmodul als Nebenproduktgasstrom entnommen.

Die nachfolgend beschriebenen, vorteilhaften Ausführungsformen des erfindungsgemäßen Verfahrens sind jeweils für beliebige Gastrennungsverfahren anwendbar und werden zweckmäßigerweise bei einem Adsorptionsverfahren und/oder einem Membranverfahren durchgeführt.

Nach einer vorteilhaften Verfahrensvariante wird der kalte Produktgasteilstrom vollständig oder teilweise und/oder zeitweise in die Umgebung eingeleitet, wobei die Umgebung mittels des kalten Produktgasteilstroms inertisiert wird und der kalte Produktgasteilstrom gleichzeitig zur Kühlung der Umgebung beiträgt.

Vorzugsweise ist also vorgesehen, den kalten Produktgasteilstrom oder zumindest einen Teil des kalten Produktgasteilstroms bedarfsweise zur Inertisierung und gleichzeitigen Kühlung in die Umgebung einzuleiten. Insbesondere kann nur, d.h. ausschließlich der kalte Produktgasteilstrom der Umgebung zugeführt werden, wobei die in der Umgebung vorhandene Atmosphäre durch den kalten Anteil des reaktionsträgen, insbesondere schwerentzündlichen Produktgasstroms (teilweise) ersetzt bzw. verdrängt wird. Eine solche Verfahrensführung ist besonders zur Inertisierung von Kühlumgebungen, deren Temperatur unterhalb einer üblichen Umgebungstemperatur liegt, geeignet. Je nach Temperatur der Kühlumgebung und des kalten Produktgasteilstroms findet also eine tatsächliche Kühlung, sofern die Temperatur des kalten Produktgasteilstroms unterhalb der Temperatur der Kühlumgebung liegt, oder zumindest eine geringere Aufheizung, sofern die Temperatur des kalten Produktgasteilstroms oberhalb der Temperatur der Kühlumgebung liegt, statt. In beiden Varianten kann die zur Kühlung der Kühlumgebung, beispielsweise eines Tiefkühllagers, notwendige Energie durch Zuleitung von tiefgekühltem, reaktionsträgem, insbesondere schwer entzündlichem Produktgas in Form des kalten Produktgasteilstroms eingespart werden. Sofern kein aktueller Kühlungs- bzw. Inertisierungsbedarf besteht, kann auf eine Einleitung des kalten Produktgasteilstroms in die Umgebung auch, zumindest zeitweise, vollständig verzichtet werden.

Nach einer alternativen oder optionalen Verfahrensführung wird der warme Produktgasteilstrom vollständig oder teilweise und/oder zeitweise in den, insbesondere während der Desorptionsphase, aus mindestens einer Gastrennungseinheit entnommenen Nebenproduktgasstrom eingeleitet.

Optional oder alternativ kann somit vorgesehen sein, den warmen Produktgasteilstrom oder zumindest einen Teil des warmen Produktgasteilstroms wahlweise bzw. bedarfsweise in den Nebenproduktgasstrom einzuleiten. Durch die Einleitung des warmen Produktgasteilstroms in den Nebenproduktgasstrom wird dieser verdünnt, d.h. der auf den Gesamtmassenstrom bezogene Anteil an reaktionsfreudigem, insbesondere leichtentzündlichem Reaktivgas, beispielsweise Sauerstoff, wird verringert, wodurch die brandfördernden Eigenschaften des sauerstoffangereicherten Nebenproduktgasstroms verringert werden. Hierdurch kann die Einordnung gemäß Druckgeräterichtlinie 2014/68/EU des Nebenproduktgasstroms von Fluidgruppe 1 (gefährlich, brandfördernd) in Fluidgruppe 2 (ungefährlich) geändert werden. Insgesamt können so die Anforderungen an das zur Führung des Nebenproduktgasstroms vorgesehene Leitungssystem bzw. an die zur Lagerung und/oder Entsorgung des Nebenproduktgases vorgesehenen Einrichtungen verringert werden. Die Einleitung des warmen Produktgasteilstroms in den Nebenproduktgasstrom sollte daher möglichst unmittelbar nach Entnahme des Nebenproduktgasstroms aus der, insbesondere in der Desorptions- und/oder Regenerationsphase befindlichen Gastrennungseinheit, insbesondere Adsorptionseinheit oder Membranmodul, erfolgen. Für den Fall, dass der Nebenproduktgasstrom mit hohem Sauerstoffanteil, beispielsweise zur Weiterverwendung in anderen Prozessen, benötigt wird kann auf eine Einleitung des warmen Produktgasteilstroms in den Nebenproduktgasstrom, zumindest zeitweise, auch vollständig verzichtet werden.

Besonders vorteilhaft ist es, den aus dem Kaltgasauslass des Wirbelrohrs entnommenen, kalten Produktgasteilstrom zur Kühlung einer Kühlumgebung zu nutzen und gleichzeitig den aus dem Warmgasauslass des Wirbelrohrs entnommenen warmen Produktgasteilstrom zur Verdünnung des Nebenproduktgasstroms. Dies ermöglicht eine besonders effiziente Verfahrensführung, wodurch die Kostenersparnis gegenüber bekannten Inertisierungsverfahren und -anlagen maximiert werden kann.

Ebenfalls optional oder alternativ kann der warme Produktgasteilstrom auch vollständig oder teilweise und/oder zeitweise mindestens einer Gastrennungseinheit, insbesondere Adsorptionseinheit, zugeführt werden.

Es ist also vorzugsweise ebenfalls vorgesehen, den warmen Produktgasteilstrom oder zumindest einen Teil des warmen Produktgasteilstroms bedarfsweise mindestens einer Adsorptionseinheit unmittelbar oder mittelbar als Bestandteil des zuströmenden bzw. zirkulierenden Gasgemischstroms, vorzugsweise während der Druckausgleichsphase zuzuführen. Gerade während der Desorptions- und/oder Regenerationsphase, trägt die im warmen Produktgasteilstrom enthaltene Wärmeenergie zur Regeneration des in der entsprechenden Adsorptionseinheit angeordneten Adsorbens bei bzw. wird der adsorbierte Reaktivgasbestandteil schneller und/oder gründlicher, d. h. vollständiger aus dem Adsorbens desorbiert. Gleichzeitig kann der in die Adsorptionseinheit eingeleitete warme Produktgasteilstrom auch zur Verdünnung des entnommenen Nebenproduktgasstroms beitragen, wodurch sich wiederum dessen brandfördernde Eigenschaften verringern und vorzugsweise die Fluidklasse ändern lassen. Die Einleitung des warmen Produktgasteilstroms in die mindestens eine Adsorptionseinheit ist rein optional, es kann also auf eine Einleitung, zumindest zeitweise, auch vollständig verzichtet werden.

Bei einer weiteren Verfahrensvariante, welche optional oder alternativ durchgeführt werden kann, wird der warme Produktgasteilstrom vollständig oder teilweise und/oder zeitweise in die Umgebung eingeleitet, wobei die Umgebung mittels des warmen, Produktgasteilstroms inertisiert wird und der warme Produktgasteilstrom gleichzeitig zur Erwärmung der Umgebung beiträgt.

Ähnlich wie bei einer Kühlung der Umgebung ist alternativ oder optional vorgesehen, den warmen Produktgasteilstrom oder zumindest einen Teil des warmen Produktgasteilstroms wahlweise bzw. bedarfsweise in die Umgebung einzuleiten, um diese zu erwärmen. Die in der Umgebung vorhandene Atmosphäre wird durch den warmen Anteil des reaktionsträgen, insbesondere schwerentzündlichen Produktgasstroms (teilweise) ersetzt bzw. verdrängt, was zur Inertisierung der Umgebung, d. h. zu einer Verminderung des in der Umgebung vorliegenden Anteils an Reaktivgas, insbesondere Sauerstoff führt. Für den Fall, dass die in der Umgebung vorliegende Temperatur unterhalb der Temperatur des warmen Produktgasteilstroms liegt, wird die Umgebung gleichzeitig durch die im warmen Produktgasteilstrom enthaltene Wärmeenergie erwärmt. Liegt die Temperatur der Umgebung oberhalb der Temperatur des warmen Produktgasteilstroms, kann die gegebenenfalls zur Erwärmung der Umgebung notwendige, anderweitig zugeführte (Wärme)Energie verringert werden.

Schließlich kann in einer optionalen Verfahrensalternative der dem Wirbelrohr entnommene kalte Produktgasteilstrom und der dem Wirbelrohr entnommene warme Produktgasteilstrom vollständig oder teilweise zu einem Mischproduktgasstrom zusammengeführt werden und dieser Mischproduktgasstrom einer Umgebung zugeführt werden, wobei die Umgebung mittels des Mischproduktgasstroms inertisiert wird.

Alternativ ist es also auch möglich, den warmen Produktgasteilstrom und den kalten Produktgasteilstrom nach Durchströmen des Wirbelrohrs zusammenzuführen und den so entstandenen Mischproduktgasstrom, dessen Temperatur üblicherweise unterhalb der Temperatur des Produktgasstroms vor dem Eintritt in das Wirbelrohr liegt, dann der Umgebung zuzuführen. Indem die beiden Produktgasteilströme nur teilweise, in unterschiedlichen Anteilen, miteinander gemischt werden kann beispielsweise auch eine Regelung der gewünschten Temperatur des Mischproduktgasstroms erfolgen.

Die zuvor beschriebenen Verfahrensvarianten können jeweils miteinander kombiniert werden, wobei der warme und/oder der kalte Produktgasteilstrom jeweils vollständig oder teilweise unterschiedlichen oder denselben Anlagenelementen zugeführt werden können. Dies kann je nach Bedarf auch zeitweise erfolgen. Zum Beispiel ist es denkbar, zunächst den kalten und den warmen Produktgasteilstrom, entweder als Einzelströme oder in Form eines Mischproduktgasstroms, der Umgebung zuzuführen, um die Dauer der initialen Inertisierung zu verkürzen. Anschließend, nach Erreichen des vorgesehenen Inertisierungsniveaus, kann dann der warme Produktgasteilstrom in den Nebenproduktgasstrom, zu dessen Verdünnung, eingeleitet werden, während der kalte Produktgasteilstrom weiterhin der Umgebung zur Aufrechterhaltung des vorgesehenen Inertisierungsniveaus und gleichzeitigen Kühlung zugeführt wird.

In einer bevorzugten Verfahrensvariante wird der Produktgasstrom innerhalb des Wirbelrohrs zumindest teilweise kondensiert und das Kondensat abgeschieden.

Bei einer solchen Gastrocknung wird mittels einer Kondensatfalle innerhalb des Wirbelrohrs, gegebenenfalls im Produktgasstrom enthaltene Restfeuchte, insbesondere in Form von Wasser, auskondensiert und als Flüssigkeit abgeschieden. Der anschließend in die Umgebung eingebrachte Produktgasstrom, bestehend aus dem kalten Produktgasteilstrom und/oder dem warmen Produktgasteilstrom weist so eine insgesamt geringere Feuchtigkeit auf, wodurch insbesondere eine Korrosion von Lagergütern aufgrund zu hoher Luftfeuchtigkeit vermieden wird.

Der, insbesondere in der Adsorptionsphase entnommene, reaktionsträge, insbesondere schwerentzündliche Produktgasstrom weist dann einen gegenüber dem Gasgemischstrom, also der verwendeten Umgebungsluft, erhöhten Stickstoffanteil auf und der, insbesondere in der Desorptionsphase entnommene reaktionsfreudige, insbesondere leichtentzündliche Nebenproduktgasstrom einen gegenüber dem Gasgemischstrom, d. h. der Umgebungsluft, erhöhten Sauerstoffanteil.

Eine erfindungsgemäße Inertisierungsanlage der eingangs näher beschriebenen Art kennzeichnet sich durch ein Wirbelrohr, welches in der Produktgasleitung angeordnet ist, wobei die Produktgasleitung zur Einleitung des aus der einen oder den mehreren Gastrennungseinheiten entnommenen Produktgasstroms in das Wirbelrohr mündet, und wobei das Wirbelrohr zur temperaturabhängigen Trennung und/oder Teilung des Produktgasstroms ausgebildet ist und einen Kaltgasauslass zur Entnahme und Bereitstellung eines kalten Produktgasteilstroms sowie einen Warmgasauslass zur Entnahme und Bereitstellung eines warmen Produktgasteilstroms aufweist.

Erfindungsgemäß wird als Gasgemischstrom Umgebungsluft verwendet, deren Reaktivgasbestandteil Sauerstoff und deren Inertgasbestandteil Stickstoff ist, und stehen der Kaltgasauslass und der Warmgasauslass des Wirbelrohrs mit einer Umgebung, nämlich einem umschlossenen Raum in fluidleitender Leitungsverbindung bzw. sind mit dem umschlossenen Raum fluidleitend verbindbar, sodass der kalte Produktgasteilstrom und/oder der warme Produktgasteilstrom zur Inertisierung des umschlossenen Raums in diesen einleitbar sind.

Im Rahmen der erfinderischen Idee ist also vorgesehen, den Produktgasauslass einer Inertisierungsanlage bzw. die sich an den Produktgasauslass anschließende Produktgasleitung mit einem Wirbelrohr zu versehen, in welches der Produktgasstrom vorzugsweise tangential über einen Gaseinlass eingeleitet werden kann. Innerhalb des Wirbelrohrs lässt sich der Produktgasstrom in einen warmen Produktgasteilstrom und eine kalten Produktgasteilstrom teilen. Zur Bereitstellung und Entnahme der beiden Produktgasteilströme weist das Wirbelrohr, vorzugsweise einander axial gegenüberliegend angeordnet, einen Kaltgasauslass und einen Warmgasauslass auf. Durch das innerhalb der Produktgasleitung angeordnete Wirbelrohr kann der reaktionsträge, insbesondere schwerentzündliche Produktgasstrom somit bedarfsweise als warmer Produktgasteilstrom, über den Warmgasauslass und/oder als kalter Produktgasteilstrom, über den Kaltgasauslass entnommen und weiterverwendet werden. Die Integrierung eines Wirbelrohrs in die Inertisierungsanlage erweitert somit die Verwendungsmöglichkeiten und die Anwendungsgebiete des zur Inertisierung erzeugten und bereitgestellten Produktgasstroms.

In der erfindungsgemäßen Ausführungsform kann eine Kaltgasleitung an den Kaltgasauslass des Wirbelrohrs, insbesondere über Stellventile zuschaltbar und/oder regelbar angeschlossen sein und in die Umgebung münden, sodass der kalte Produktgasteilstrom zumindest teilweise und/oder zeitweise in diese einleitbar ist. Ebenso kann eine Warmgasleitung an den Warmgasauslass des Wirbelrohrs, insbesondere über Stellventile zuschaltbar und/oder regelbar angeschlossen sein und in die Umgebung münden, sodass auch der warme Produktgasteilstrom zumindest teilweise und/oder zeitweise in diese einleitbar ist. Bedarfsweise können also entweder die Kaltgasleitung oder die Warmgasleitung, oder sogar beide Leitungen in die Umgebung münden. Auf diese Weise kann der Produktgasstrom zusätzlich zur Inertisierung der Umgebung auch zu deren Temperaturregelung, je nach Bedarf zur Erwärmung, mittels des warmen Produktgasteilstroms oder zur Abkühlung mittels des kalten Produktgasteilstroms verwendet werden.

Vorteilhafterweise kann der Warmgasauslass des Wirbelrohrs auch mit einer Verbindungsleitung der Inertisierungsanlage in Leitungsverbindung stehen und fluidleitend mit dieser verbindbar sein, sodass der warme Produktgasteilstrom in die Verbindungsleitung einleitbar ist.

Der warme Produktgasteilstrom trägt dann als Bestandteil des Gasgemischstroms zur Regeneration des Adsorbens bei, weil die unmittelbar an den Gasgemischstrom übertragene Wärmeenergie die Effizienz der Regeneration erhöht bzw. die Desorption erleichtert. Alternativ ist auch denkbar, den warmen Produktgasteilstrom direkt in die jeweilige, in der Desorptions- und/oder Regenerationsphase befindliche Adsorptionseinheit einzuleiten. Hierzu wäre jeweils eine Leitungsverbindung zwischen dem Warmgasauslass und der entsprechenden Adsorptionseinheit vorzusehen.

Der Warmgasauslass des Wirbelrohrs kann in einer weiteren, vorteilhaften Ausgestaltung der erfindungsgemäßen Inertisierungsanlage auch mit der Nebenproduktgasleitung in Leitungsverbindung stehen und fluidleitend verbindbar sein, sodass der warme Produktgasteilstrom in die Nebenproduktgasleitung einleitbar ist.

Wie bereits beschrieben kann auf diese Weise der Nebenproduktgasstrom verdünnt werden, wodurch sich die Fluidgruppeneinordnung nach Druckgeräterichtlinie 2014/68/EU des Nebenproduktgasstroms von Fluidgruppe 1 (gefährlich, brandfördernd) zu Fluidgruppe 2 (ungefährlich) ändern lässt, sodass die nachfolgende Peripherie (Rohrleitungen, Druckbehälter usw.) weniger strengen Sicherheitsvorschriften unterliegen und in der Folge kostengünstiger bereitgestellt werden können. Insbesondere kann die Nebenproduktgasleitung auf diese Weise als eine die Fluidgruppe 2 fördernde Leitung ausgelegt werden.

Eine vorteilhafte Ausführung der Inertisierungsanlage sieht vor, dass das Wirbelrohr eine Kondensatfalle zur Abscheidung von bei der Trennung und/oder Teilung des Produktgasstroms anfallendem Kondensat aufweist.

Bei der temperaturabhängigen Aufteilung des Produktgasstroms durch Verwirbelung im Wirbelrohr kondensiert, insbesondere die im warmen Produktgasteilstrom enthaltene Restfeuchte bei Kontakt mit der Wirbelrohrinnenwandung aus und setzt sich an dieser ab. Durch Verwendung einer Kondensatfalle, welche beispielsweise als radial angeordnete Auslassöffnungen an der Wirbelrohrinnenwandung ausgebildet ist, kann das sich absetzende Kondensat, vorzugsweise in Richtung des Warmgasauslasses abgeführt werden. Hierdurch wird eine Gastrocknung des Produktgasstroms, insbesondere des warmen Produktgasteilstroms ermöglicht. Das abgeschiedene Kondensat kann über eine entsprechende Kondensatleitung abgeführt und gegebenenfalls in anderen Anwendungen weiter verwendet werden.

Das Wirbelrohr kann nach einer vorteilhaften Ausgestaltung mit Einstellmitteln zur Einstellung des Temperaturunterschieds zwischen dem warmen Produktgasteilstrom und dem kalten Produktgasteilstrom ausgestattet sein.

Denkbar ist hierzu eine, insbesondere teleskopartige Längenverstellbarkeit durch Positionsänderung eines Endstücks oder aber die Verwendung eines Regelventils. Durch die Verwendung derartiger Einstellmittel lässt sich in einfacher Weise die Temperatur des am Kaltgasauslass entnehmbaren kalten Produktgasteilstroms und des am Warmgasauslass entnehmbaren warmen Produktgasteilstroms regulieren oder zumindest vorregulieren, um eine bedarfsweise Temperierung der zu inertisierenden Umgebung zu erleichtern.

Eine erfindungsgemäße Verwendung der eingangs näher bezeichneten Art kennzeichnet, sich dadurch, dass der Produktgasstrom in ein Wirbelrohr eingeleitet, innerhalb des Wirbelrohrs in einen warmen Produktgasteilstrom und in einen kalten Produktgasteilstrom geteilt wird und anschließend der kalte Produktgasteilstrom vollständig oder teilweise in die Kühlumgebung eingeleitet wird.

Durch die Integrierung eines Wirbelrohrs ergibt sich als erfindungsgemäße Verwendung die Möglichkeit zur Erzeugung und Bereitstellung eines kalten Produktgasstroms bzw. eines kalten Produktgasteilstroms, welcher besonders geeignet zur Inertisierung einer Kühlumgebung, vorzugsweise eines Tiefkühllagers ist. Gerade bei der Lagerung von tiefgekühlten Lebensmitteln wird das Tiefkühllager auf - 18 °C oder tiefer herabgekühlt, wofür ein nicht unerheblicher Energiebedarf zur Aufbringung der erforderlichen Kühlleistung benötigt wird. Durch den Einbau eines Wirbelrohrs kann der zur Inertisierung eines Tiefkühllagers verwendete Produktgasstrom ohne zusätzlichen Energiebedarf, beispielsweise in Form von Elektrizität, vorgekühlt werden bzw. dessen Temperatur abgesenkt werden, sodass der zur Kühlung des Tiefkühllagers benötigte Energiebedarf verringert wird oder bestenfalls die Kühlumgebung, insbesondere das Tiefkühllager ausschließlich durch den kalten Produktgasteilstrom kühlbar ist. Neben der Verwendung einer Inertisierungsanlage mit integriertem Wirbelrohr ist selbstverständlich auch das Nachrüsten bestehender Inertisierungsanlagen mit einem Wirbelrohr möglich.

Insgesamt ist im Rahmen der erfinderischen Idee vorgesehen, ein Wirbelrohr in eine Inertisierungsanlage zu integrieren, um die Möglichkeiten eines Inertisierungsverfahren zu erweitern und eine effizientere Verwendung der Inertisierungsanlage, insbesondere für eine Kühlumgebung, zu ermöglichen.

Es ist darauf hinzuweisen, dass die in der vorangegangenen und nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Weitere vorteilhafte Ausgestaltungen der Erfindung sind in der folgenden Figurenbeschreibung offenbart. Es zeigen
Figur 1a eine schematische Darstellung einer beispielhaften Ausführungsform einer erfindungsgemäßen Inertisierungsanlage mit einem Wirbelrohr in einer Adsorptions-/Desorptionsphase,
Figur 1b eine schematische Darstellung einer beispielhaften Ausführungsform einer erfindungsgemäßen Inertisierungsanlage mit einem Wirbelrohr in einer Druckausgleichsphase,
Figur 2 eine vergrößerte, schematische Schnittdarstellung des Wirbelrohrs der beispielhaften Ausführungsform der erfindungsgemäßen Inertisierungsanlage nach den Figuren 1a und 1b,
Figur 3 eine schematische Darstellung einer beispielhaften Ausführungsform einer erfindungsgemäßen Inertisierungsanlage mit einem Wirbelrohr zur Durchführung einer ersten Verfahrensvariante,
Figur 4 eine schematische Darstellung einer beispielhaften Ausführungsform einer erfindungsgemäßen Inertisierungsanlage mit einem Wirbelrohr zur Durchführung einer zweiten Verfahrensvariante,
Figur 5 eine schematische Darstellung einer beispielhaften Ausführungsform einer erfindungsgemäßen Inertisierungsanlage mit einem Wirbelrohr zur Durchführung einer dritten Verfahrensvariante und
Figur 6 eine schematische Darstellung einer beispielhaften Ausführungsform einer erfindungsgemäßen Inertisierungsanlage zur Durchführung eines Membranverfahrens.

In den unterschiedlichen Figuren sind gleiche Teile stets mit denselben Bezugszeichen versehen, weswegen diese in der Regel auch nur einmal beschrieben werden.

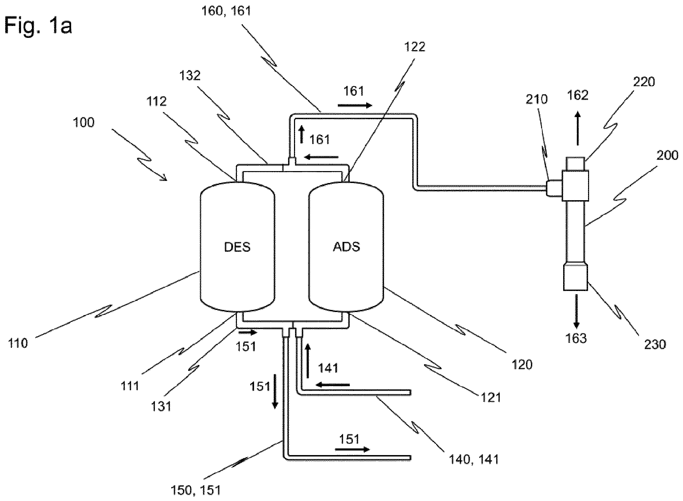

Der Figur 1a kann eine schematische Darstellung einer beispielhaften Ausführungsform einer erfindungsgemäßen Inertisierungsanlage 100 mit einem Wirbelrohr 200 entnommen werden. Die Inertisierungsanlage 100 ist als eine nach einem Druckwechsel-Adsorptionsverfahren arbeitende Anlage, auch als sogenannte Pressure Swing Adsorption (PSA) bezeichnet, ausgeführt und weist eine erste Adsorptionseinheit 110 sowie eine zweite Adsorptionseinheit 120 auf. Die Adsorptionseinheiten 110, 120 sind vorzugsweise als Behälter, insbesondere Festbettreaktor, ausgeführt und beinhalten ein Adsorbens, bei welchem es sich beispielsweise um Zeolithe oder Aktivkohle handeln kann. Über einen jeweiligen ersten Leitungsanschluss 111, 121 sind die Adsorptionseinheiten 110, 120 jeweils mit einer ersten Verbindungsleitung 131 und über einen jeweiligen zweiten Leitungsanschluss 112, 122 jeweils mit einer zweiten Verbindungsleitung 132 verbunden. Die erste und die zweite Verbindungsleitung 131, 132 verbinden somit die erste Adsorptionseinheit 110 und die zweite Adsorptionseinheit 120 miteinander. An die erste Verbindungsleitung 131 schließt sich eine Gasgemischleitung 140 welche zur Zuführung eines Gasgemischstroms 141 wechselweise zu der ersten Adsorptionseinheit 110 bzw. zu der zweiten Adsorptionseinheit 120 vorgesehen ist. Ferner ist eine Nebenproduktgasleitung 150 mit der ersten Verbindungsleitung 131 verbunden, welche ebenfalls zur Entnahme bzw. zum Abführen eines Nebenproduktgasstroms 151 wechselweise aus der ersten Adsorptionseinheit 110 bzw. aus der zweiten Adsorptionseinheit 120 vorgesehen ist. An die zweite Verbindungsleitung 132 schließt sich eine Produktgasleitung 160 an, welche zur Entnahme bzw. zum Abführen eines Produktgasstroms 161 wechselweise aus der ersten Adsorptionseinheit 110 bzw. aus der zweiten Adsorptionseinheit 120 vorgesehen ist. Die Produktgasleitung 160 mündet in das Wirbelrohr 200 bzw. ist das Wirbelrohr 200 in der Produktgasleitung 160 angeordnet und ein Gaseinlass 210 des Wirbelrohrs 200 mit der Produktgasleitung 160 verbunden. Der Gaseinlass 210 ist vorzugsweise radial bzw. tangential zur Längsachse des Wirbelrohrs 200 angeordnet. Das Wirbelrohr 200 umfasst außerdem einen Kaltgasauslass 220 sowie einen Warmgasauslass 230, welche einander gegenüberliegend axial angeordnet und den jeweiligen Enden des Wirbelrohrs 200 zugeordnet sind.

Anhand der in der Figur 1a enthaltenen Pfeile soll nun die Verfahrensführung einer Druckwechsel-Adsorption näher erläutert werden, wobei sich die erste Adsorptionseinheit 110 der Inertisierungsanlage 100 in einer Desorptions- und/oder Regenerationsphase (DES) befindet und die zweite Adsorptionseinheit 120 in einer Adsorptionsphase (ADS). Hierzu ist die zweite Adsorptionseinheit 120 mit einem Druck beaufschlagt und fluidleitend mit der Gasgemischleitung 140 verbunden. Über die Gasgemischleitung 140 wird ein Gasgemischstrom 141, insbesondere Umgebungsluft, welcher einen Reaktivgasbestandteil, vorzugsweise den in der Umgebungsluft enthaltenen Sauerstoff und einen Inertgasbestandteil, vorzugsweise den in der Umgebungsluft enthaltenen Stickstoff aufweist, der zweiten Adsorptionseinheit 120 zugeführt. Insbesondere kann der Gasgemischstrom 141 unter Druck in die zweite Adsorptionseinheit 120 eingeleitet werden, wodurch diese mit dem zur Adsorption notwendigen Druck beaufschlagt wird. Innerhalb der zweiten Adsorptionseinheit 120 adsorbiert der in dem Gasgemischstrom 141 enthaltene Reaktivgasbestandteil, insbesondere der Sauerstoff, an das Adsorbens und wird so von den übrigen, nicht adsorbierten und/oder nicht absorbierenden Bestandteilen, insbesondere dem Inertgasbestandteil bzw. Stickstoff getrennt. Während sich die zweite Adsorptionseinheit 120 in der Adsorptionsphase befindet ist diese fluidleitend mit der Produktgasleitung 160 verbunden, sodass die nicht adsorbierten und/oder nicht adsorbierenden Bestandteile, insbesondere der Inertgasbestandteil bzw. Stickstoff des Gasgemischstroms 141 über die Produktgasleitung 160 als Produktgasstrom 161 entnehmbar sind. Um den Produktgasstrom 161 in das Wirbelrohr 200 einzuleiten mündet die Produktgasleitung 160 in das Wirbelrohr 200 bzw. ist die Produktgasleitung 160 fluidleitend mit einem Gaseinlass 210 des Wirbelrohrs 200 verbunden.

Die erste Adsorptionseinheit 110 befindet sich währenddessen in der Desorptions- und/oder Regenerationsphase und weist daher einen Druck auf der niedriger als der in der zweiten Adsorptionseinheit 120 anliegende Druck ist. Aufgrund der Druckabsenkung während der Desorptions- und/oder Regenerationsphase desorbiert der Reaktivgasbestandteil, vorzugsweise Sauerstoff, welcher in einer vorangegangenen Adsorptionsphase an das Adsorbens adsorbiert hat, und kann als Nebenproduktgasstrom 151 über die Nebenproduktgasleitung 150 entnommen und abgeführt werden. Die Nebenproduktgasleitung 150 ist hierzu fluidleitend mit der ersten Adsorptionseinheit 110 verbunden. Der in der Adsorptionsphase entnommene Produktgasstrom 161 weist einen gegenüber dem Gasgemischstrom 141 erhöhten Inertgasbestandteil, insbesondere Stickstoffanteil und der in der Desorptionsphase entnommene Nebenproduktgasstrom 151 einen gegenüber dem Gasgemischstrom 141 erhöhten Reaktivgasbestandteil, insbesondere Sauerstoffanteil auf.

Der Produktgasstrom 160 wird aus der unter Druck stehenden, zweiten Adsorptionseinheit 120 entnommen und vorzugsweise radial bzw. tangential, unter Druck über den Gaseinlass 210 in das Wirbelrohr 200 eingeleitet. Innerhalb des Wirbelrohrs 200 wird der Produktgasstrom 160 in einen kalten Produktgasteilstrom 162 und einen warmen Produktgasteilstrom 163 geteilt. Der warme Produktgasteilstrom 163 kann an dem axial angeordneten Warmgasauslass 230 entnommen werden und ist wärmer, weist also eine höhere Temperatur auf, als der in das Wirbelrohr 200 eingeleitete Produktgasstrom 160. Der kalte Produktgasteilstrom 162 kann an dem axial gegenüberliegenden Kaltgasauslass 210 entnommen werden und ist kälter, weist also eine geringere Temperatur auf, als der Produktgasstrom 160.

Bei dieser sogenannten Druckwechsel-Adsorption findet ein zyklisches Umschalten zwischen der Adsorptionsphase und der Desorptions- und/oder Regenerationsphase innerhalb jeder Adsorptionseinheit 110, 120 statt. Die Adsorptionseinheiten 110, 120 sind parallel geschaltet, sodass wechselweise die zweite Adsorptionseinheit 120 eine Absorptionsphase durchläuft, während sich die erste Adsorptionseinheit 110 in der Desorptions- und/oder Regenerationsphase befindet. Sobald sich das aktuell adsorbierende Adsorbens in seinem Sättigungsbereich befindet oder sich seinem Sättigungsbereich nähert, wird umgeschaltet und die zweite Adsorptionseinheit 120 durchläuft eine Desorptions- und/oder Regenerationsphase wohingegen innerhalb der der ersten Adsorptionseinheit 110 eine Adsorptionsphase eingeleitet wird.

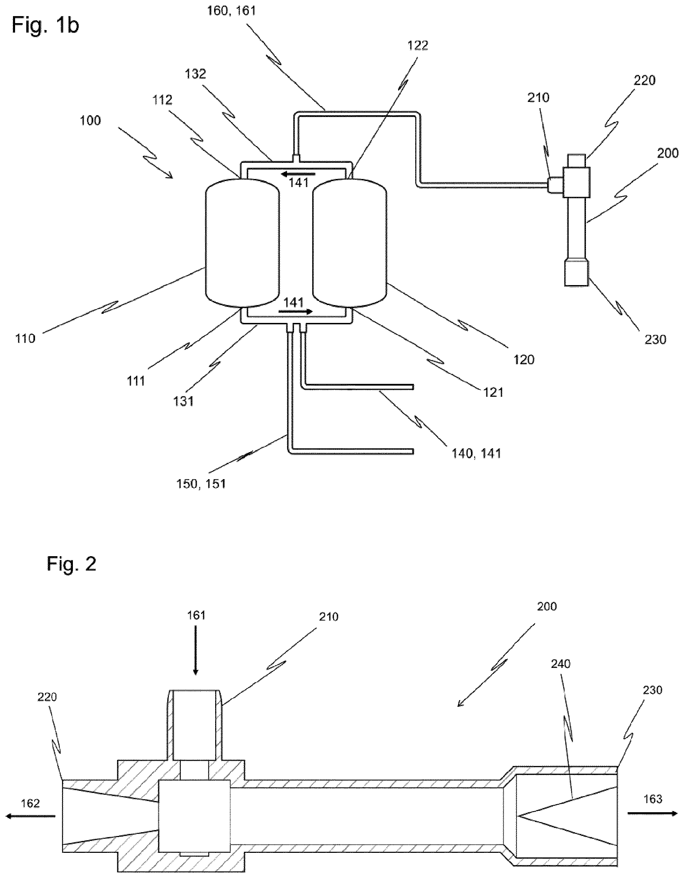

Zwischen jedem Wechsel wird eine Druckausgleichsphase durchgeführt, deren Verfahrensführung anhand der Figur 1b und der darin eingezeichneten Pfeile näher erläutert wird. Die Figur 1b zeigt die beispielhafte Ausführungsform der erfindungsgemäßen Inertisierungsanlage 100 mit einem Wirbelrohr 200 aus der Figur 1a mit identischen Anlagenbestandteilen, weshalb auf diese nachfolgend nicht näher eingegangen wird. Zur Durchführung der Druckausgleichsphase werden die erste Adsorptionseinheit 110 und die zweite Adsorptionseinheit 120 fluidleitend miteinander verbunden, wobei der Gasgemischstrom 141 zum Ausgleich des innerhalb der ersten Adsorptionseinheit 110 und innerhalb der zweiten Adsorptionseinheit 120 anliegenden Drucks zwischen den beiden Adsorptionseinheiten 110, 120 strömt bzw. zirkuliert. In der Figur 1b ist die Druckausgleichsphase, welche einer Adsorptionsphase der zweiten Adsorptionseinheit 120 und einer Desorptions- und/oder Regenerationsphase der ersten Adsorptionseinheit 110 folgt, dargestellt. Der Gasgemischstrom 141 verlässt die zweite Adsorptionseinheit über deren zweiten Leitungsanschluss 122, durchströmt die zweite Verbindungsleitung 132 und tritt über den zweiten Leitungsanschluss 112 der ersten Adsorptionseinheit 110 in diese ein. Über den ersten Leitungsanschluss 111 kann der Gasgemischstrom 141 in die erste Verbindungsleitung 131 eintreten und dem ersten Leitungsanschluss 121 der zweiten Adsorptionseinheit 120 zuströmen. Um die beiden Adsorptionseinheiten 110, 120 fluidleitend miteinander zu verbinden werden die Verbindungsleitungen 131, 132 beispielsweise über Stellventile freigeschaltet, wohingegen die fluidleitenden Verbindungen mit der Gasgemischleitung 140, der Nebenproduktgasleitung 150 und der Produktgasleitung 160, vorzugsweise ebenfalls über Stellventile getrennt werden.

In der Figur 2 ist eine schematische Schnittdarstellung eines aus dem Stand der Technik bekannten Wirbelrohrs 200, welches erfindungsgemäßer Bestandteil der beispielhaften Ausführungsform der erfindungsgemäßen Inertisierungsanlage 100 aus den Figuren 1a und 1b ist, dargestellt. Das Wirbelrohr 200 ist im Wesentlichen zylindrisch ausgebildet und umfasst einen Gaseinlass 210, welcher sich radial an das Wirbelrohr 200 anschließt und zur tangentialen Einleitung des unter Druck stehenden Produktgasstroms 161 in das Innere des Wirbelrohrs 200 ausgebildet ist. Innerhalb des Wirbelrohrs 200 wird der Produktgasstrom 161 in schnelle Rotation versetzt, wobei der radial äußere Bereich des verwirbelten Produktgasstroms 161 eine höhere Temperatur aufweist und den warmen Produktgasteilstrom 163 ausbildet. Der radial innen liegende Bereich des verwirbelten Produktgasstroms 161 weist eine niedrigere Temperatur auf und bildet den kalten Produktgasteilstrom 162 aus. An einem axialen Ende des Wirbelrohrs 200 ist ein Kaltgasauslass 220 zur Entnahme des kalten Produktgasteilstroms 162 angeordnet. An dem gegenüberliegenden axialen Ende des Wirbelrohrs 200 ist ein Warmgasauslass 230 zur Entnahme des warmen Produktgasteilstroms 163 angeordnet. Innerhalb des Wirbelrohrs 200, dem Warmgasauslass 230 zugeordnet ist ein Einstellmittel 240, insbesondere ein Stellventil, zur Einstellung des Temperaturunterschieds zwischen dem warmen Produktgasteilstrom 163 und dem kalten Produktgasteilstrom 162 vorgesehen.

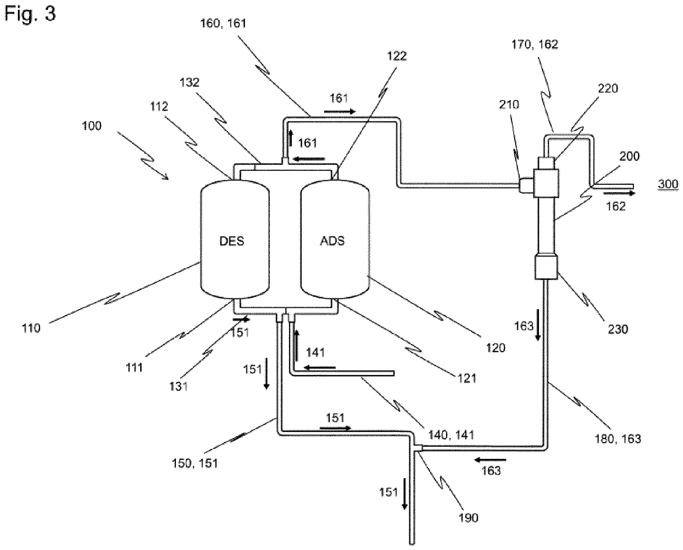

In der Figur 3 ist eine beispielhafte Ausführungsform der erfindungsgemäßen Inertisierungsanlage 100 zur Durchführung einer ersten Verfahrensvariante dargestellt. Die in der Figur 3 dargestellte Inertisierungsanlage 100 weist im wesentlichen identische Anlagenkomponenten mit der Inertisierungsanlage 100 wie in den Figuren 1a und 1b dargestellt auf, weshalb diese im Einzelnen nicht näher beschrieben werden. Zusätzlich ist der Kaltgasauslass 220 des Wirbelrohrs 200 mit einer Kaltgasleitung 170 zur Entnahme des kalten Produktgasteilstroms 162 und Einleitung in eine zu inertisierende Umgebung 300. Hierzu stellt die Kaltgasleitung 170 eine fluidleitende Verbindung zwischen dem Wirbelrohr 200 bzw. zwischen dessen Kaltgasauslass 220 und der Umgebung 300 her. Bei der Umgebung 300 handelt es sich bspw. um eine Kühlumgebung, insbesondere ein Tiefkühllager, welches mittels des kalten, stickstoffangereicherten Produktgasteilstroms 162 inertisiert und gleichzeitig gekühlt wird. Der Warmgasauslass 230 des Wirbelrohrs 200 ist mit einer Warmgasleitung 180 verbunden, welche zur Entnahme und Förderung des warmen Produktgasteilstroms 163 vorgesehen ist. Die Warmgasleitung 180 ist mit der Nebenproduktgasleitung 150, vorzugsweise über ein Rückschlagventil 190 verbunden bzw. mündet in die Nebenproduktgasleitung 150, sodass der warme Produktgasteilstrom zur Verdünnung des Nebenproduktgasstroms 151 in diesen einleitbar und als dessen Bestandteil weiter gefördert wird. Durch die Einleitung des warmen Produktgasteilstroms 163 in den Nebenproduktgasstrom 151 lässt sich dessen Fluidgruppe von Fluidgruppe 1 (gefährlich, brandfördernd) in Fluidgruppe 2 (ungefährlich) ändern, insbesondere wird der enthaltene Reaktivgasanteil bzw. Sauerstoffanteil abgesenkt, wodurch die brandfördernden Eigenschaften des sauerstoffangereicherten Nebenproduktgasstroms 151 verringert werden und so die Anforderungen an das zur Führung des Nebenproduktgasstroms 151 vorgesehene Leitungssystem bzw. an die zur Lagerung und/oder Entsorgung des Nebenproduktgases vorgesehenen Einrichtungen verringert werden. Aufgrund dieser ersten Verfahrensvariante kann gleichzeitig eine Umgebung 300, insbesondere Kühlumgebung oder Tiefkühllager, mittels des kalten, stickstoffangereicherten Produktgasteilstroms 162 inertisiert und gekühlt werden, während der sauerstoffangereicherte Nebenproduktgasstrom 151 durch den warmen Produktgasteilstrom 163 verdünnt und derart dessen brandfördernde Eigenschaften verringert werden können.

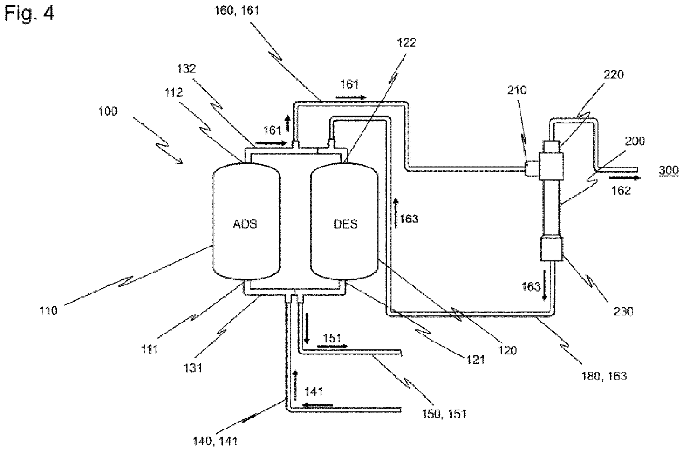

Der Figur 4 kann eine beispielhafte Ausführung einer erfindungsgemäßen Inertisierungsanlage 100 zur Durchführung einer zweiten Verfahrensvariante entnommen werden. Die in der Figur 4 dargestellte Inertisierungsanlage 100 unterscheidet sich von der in der Figur 3 dargestellten Inertisierungsanlage 100 dadurch, dass sich hier, gerade umgekehrt, die erste Adsorptionseinheit 110 der Inertisierungsanlage 100 in einer Adsorptionsphase (ADS) befindet und fluidleitend mit einer Gasgemischleitung 140 sowie der Produktgasleitung 160 verbunden ist. Die zweite Adsorptionseinheit 120 befindet sich folglich in einer Desorptions- und/oder Regenerationsphase (DES) und ist fluidleitend mit einer Nebenproduktgasleitung 150 und mit einer Warmgasleitung 180 verbunden. Die übrigen Anlagenkomponenten entsprechen der in der Figur 3 dargestellten Inertisierungsanlage 100 und werden im Einzelnen daher nicht näher erläutert. Die Warmgasleitung 180 ist mit dem Warmgasauslass 230 des Wirbelrohrs 200 verbunden und zur Entnahme und Führung des warmen Produktgasteilstroms 163 vorgesehen. Um den warmen Produktgasteilstrom 163 mittelbar der jeweils in der Desorptionsphase befindlichen Adsorptionseinheit 110, 120 zuzuführen mündet die Warmgasleitung 180 in die zweite Verbindungsleitung 132 oder alternativ in die erste Verbindungsleitung 131 (nicht dargestellt), sodass der warme Produktgasteilstrom 163, insbesondere während der Druckwechselphase, als Bestandteil des Gasgemischstroms 141 der entsprechenden Adsorptionseinheit 110, 120 zugeführt wird. Der warme Produktgasteilstrom 163 trägt dann als Bestandteil des Gasgemischstroms 141 zur Regeneration des Adsorbens bei, indem die unmittelbar an den Gasgemischstrom 141 übertragene Wärmeenergie die Effizienz der Regeneration erhöht bzw. die Desorption erleichtert.

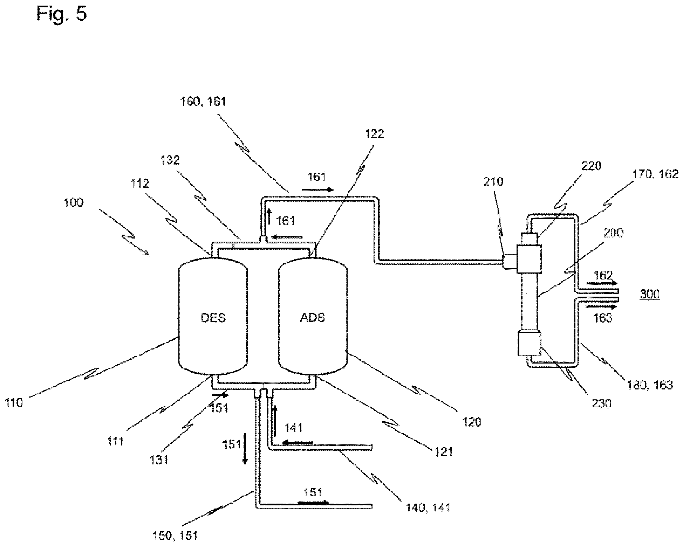

In der beispielhaften Ausführung einer erfindungsgemäßen Inertisierungsanlage 100 gemäß Figur 5 ist die Durchführung einer dritten Verfahrensvariante dargestellt. Auch die in der Figur 5 gezeigte Inertisierungsanlage 100 entspricht im Wesentlichen der in den Figuren 3 und 4 gezeigten Inertisierungsanlage 100 und unterscheidet sich wiederum aufgrund der Warmgasleitung 180. Diese schließt sich an den Warmgasauslass 230 des Wirbelrohrs 200 an und ist wie auch die Kaltgasleitung 170 fluidleitend mit der zu inertisierenden Umgebung 300 verbunden bzw. mündet die Warmgasleitung 180 in die Umgebung 300. Alternativ ist es auch denkbar, den dem Wirbelrohr 200 entnommenen kalten Produktgasteilstrom 162 und den dem Wirbelrohr 200 entnommenen warmen Produktgasteilstrom 163 vollständig oder teilweise zu einem Mischproduktgasstrom zusammenzuführen und diesen Mischproduktgasstrom in die Umgebung 300 einzuleiten. Indem die beiden Produktgasteilströme 162, 163 nur teilweise, in unterschiedlichen Anteilen der Umgebung 300 zugeführt werden kann eine geregelte Temperierung der Umgebung 300 erfolgen. Gleichzeitig kann durch Einleitung beider Produktgasteilströme 162, 163 eine raschere Inertisierung der Umgebung 300 erfolgen bzw. der in der Umgebung 300 vorliegende Sauerstoffanteil schneller ersetzt und/oder ausgetauscht bzw. verdrängt werden.

Vorteilhafterweise sind die zuvor beschriebenen, in den jeweiligen Figuren 3-5 dargestellten Leitungsverbindungen, insbesondere über Stellventile zuschaltbar bzw. abtrennbar und/oder regelbar angeschlossen, um entsprechende Anlagenkomponenten fluidleitend miteinander zu verbinden bzw. eine bestehende fluidleitende Verbindung zu trennen oder zu regeln. Auf diese Weise ist es möglich, die einzelnen Verfahrensvarianten flexibel und bedarfsweise miteinander zu kombinieren, wobei die einzelnen Gasströme vollständig oder teilweise und zumindest zeitweise den vorgesehenen Anlagenkomponenten, Leitungen oder der Umgebung zugeführt werden können.

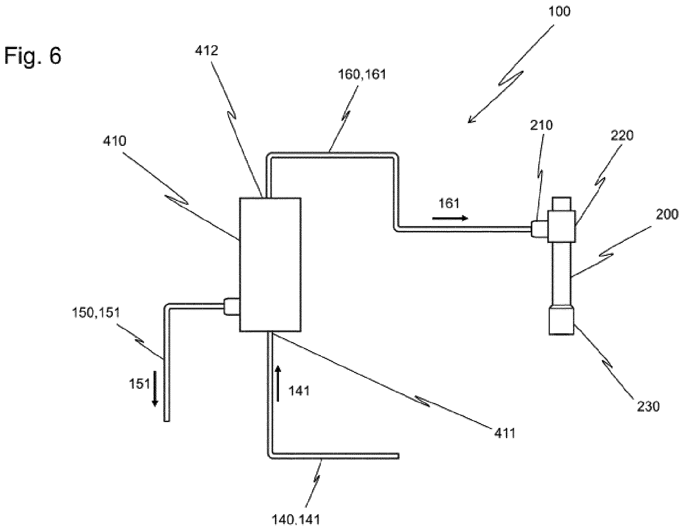

In der Figur 6 ist eine beispielhafte Ausführungsform einer erfindungsgemäßen Inertisierungsanlage 100, welche zur Durchführung eines Membranverfahrens geeignet ist, dargestellt. Wie auch die vorausgehend beschriebenen Ausführungsformen der erfindungsgemäßen Inertisierungsanlagen 100 umfasst die in der Figur 6 dargestellte Inertisierungsanlage 100 eine Gasgemischleitung 140, eine Nebenproduktgasleitung 150 sowie eine Produktgasleitung 160, wobei letztere in das Wirbelrohr 200 mündet bzw. mit einem Gaseinlass 210 des Wirbelrohrs verbunden ist. Anders als bei den zuvor beschriebenen Ausführungsformen ist anstelle der beiden Adsorptionseinheiten 110, 120 ein einzelnes, rohrförmig ausgebildetes Membranmodul 410 vorgesehen und sowohl mit der Gasgemischleitung 140, der Nebenproduktgasleitung 150 als auch der Produktgasleitung 160 verbunden. Das Membranmodul 410 ist zur kontinuierlichen Trennung des in der Gasgemischleitung 140 zugeführten Gasgemischstroms 141 geeignet und enthält in seinem Inneren eine Vielzahl an koaxial zueinander und zu dem Membranmodul 410 angeordneten Hohlfasermembranen. Auf die Außenfläche der Hohlfasermembranen ist ein Separationsmittel zur Erzeugung einer Diffusionsschicht aufgebracht, durch welches der im Gasgemischstrom 141 enthaltene Reaktivgasbestandteil, insbesondere Sauerstoff, und zudem Wasserdampf schnell diffundieren. Der Inertgasbestandteil, insbesondere Stickstoff, weist hingegen gegenüber dem Separationsmittel eine geringe Diffusionsgeschwindigkeit auf und wird daher durch die ausgebildete Diffusionsschicht zurückgehalten.

Mittels der Gasgemischleitung 140 wird der Gasgemischstrom 141 unter Druckbeaufschlagung über ein erstes Längsende 411 des Membranmoduls 410 zentral in dieses eingeleitet und strömt dabei gleichzeitig in das Innere der innerhalb des Membranmoduls 410 angeordneten Hohlfasermembranen. Während der Reaktivgasbestandteil radial durch die Wandungen der Hohlfasermembranen diffundiert wird der Inertgasbestandteil größtenteils im Faserinneren gehalten und kann an einem dem ersten Längsende 411 gegenüberliegend angeordneten, zweiten Längsende 412 des Membranmoduls 410 über die dort angeschlossene Produktgasleitung 160 als Produktgasstrom 161 entnommen werden. Der diffundierte Reaktivgasbestandteil reichert sich hingegen im radialen Außenbereich des Membranmoduls 410 an und lässt sich über die radial angeschlossene Nebenproduktgasleitung 150 als Nebenproduktgasstrom 151 entnehmen. Der entnommene Produktgasstrom 161 wird, wie gehabt, zu dessen temperaturabhängiger Teilung dem Wirbelrohr 200 zugeführt.

Erfindungsgemäß ist vorgesehen, die zuvor beschriebenen vorteilhaften Verfahrensvarianten, soweit möglich, auf beliebige Gastrennungsverfahren, insbesondere auf das in der Figur 6 dargestellte Membranverfahren anzuwenden.

Insgesamt wird durch die unterschiedlichen, beispielhaften Ausführungsformen der erfindungsgemäßen Inertisierungsanlage 100 und des durchgeführten Inertisierungsverfahren eine verbesserte und effizientere Inertisierung einer temperierten Umgebung 300 ermöglicht und werden zusätzliche Verwendungsmöglichkeiten des Produktgasstroms 161 vorgesehen. Beispielsweise können durch Einleitung des warmen Produktgasteilstroms 163 und/oder des kalten Produktgasteilstroms 162 in die Umgebung 300 Kosten zu deren Temperierung eingespart werden. Alternativ oder gleichzeitig kann der warme Produktgasteilstrom 163 zur Verdünnung des sauerstoffangereicherten Nebenproduktgasstroms 151 in diesen eingeleitet werden um dessen brandfördernde Eigenschaften zu verringern.

### Bezugszeichenliste:

- 100: Inertisierungsanlage
- 110: Gastrennungseinheit, erste Adsorptionseinheit
- 111: erster Leitungsanschluss der ersten Adsorptionseinheit
- 112: zweiter Leitungsanschluss der ersten Adsorptionseinheit
- 120: Gastrennungseinheit, zweite Adsorptionseinheit
- 121: erster Leitungsanschluss der zweiten Adsorptionseinheit
- 122: zweiter Leitungsanschluss der zweiten Adsorptionseinheit
- 131: erste Verbindungsleitung
- 132: zweite Verbindungsleitung
- 140: Gasgemischleitung
- 141: Gasgemischstrom
- 150: Nebenproduktgasleitung
- 151: Nebenproduktgasstrom
- 160: Produktgasleitung
- 161: Produktgasstrom
- 162: kalter Produktgasteilstrom
- 163: warmer Produktgasteilstrom
- 170: Kaltgasleitung
- 180: Warmgasleitung
- 190: Rückschlagventil
- 200: Wirbelrohr
- 210: Gaseinlass
- 220: Kaltgasauslass
- 230: Warmgasauslass
- 240: Einstellmittel
- 300: Umgebung
- 410: Gastrennungseinheit, Membranmodul
- 411: erstes Längsende
- 412: zweites Längsende

## Patentansprüche

1. Inertisierungsverfahren zur Durchführung in einer Inertisierungsanlage (100) nach Anspruch 8, insbesondere zur Brandvermeidung, wobei ein reaktionsträger, insbesondere schwerentzündlicher Produktgasstrom (161) ausgehend von einem Gasgemischstrom (141) erzeugt wird, welcher Gasgemischstrom (141) zumindest einen Reaktivgasbestandteil und einen Inertgasbestandteil enthält, wobei
- als Gasgemischstrom (141) Umgebungsluft verwendet wird, deren Reaktivgasbestandteil Sauerstoff und deren Inertgasbestandteil Stickstoff ist,
- der Gasgemischstrom (141) mindestens einer Gastrennungseinheit (110, 120, 410) unter Druckbeaufschlagung zugeführt wird und der Reaktivgasbestandteil zumindest teilweise mittels eines Trennmittels von dem Gasgemischstrom (141) getrennt wird,
- die von dem Gasgemischstrom (141) nicht getrennten und/oder nicht trennbaren Gasbestandteile als Produktgasstrom (161) der mindestens einen Gastrennungseinheit (110, 120, 410) entnommen werden, und
- die von dem Gasgemischstrom (141) getrennten Reaktivgasbestandteile der mindestens einen Gastrennungseinheit (110, 120, 410) als Nebenproduktgasstrom (151) entnommen werden,
**dadurch gekennzeichnet, dass**
- der der mindestens einen Gastrennungseinheit (110, 120, 410) entnommene Produktgasstrom (161) in ein Wirbelrohr (200) eingeleitet,
- innerhalb des Wirbelrohrs (200) in einen warmen Produktgasteilstrom (163) und in einen kalten Produktgasteilstrom (162) geteilt und/oder getrennt wird, und
- der warme und/oder der kalte Produktgasteilstrom (162, 163) vollständig oder teilweise und/oder zeitweise entweder mit einer der in einem umschlossenen Raum (300) vorliegenden Umgebungstemperatur entsprechenden oder wahlweise mit einer zur Kühlung oder Erwärmung des umschlossenen Raums (300) beitragenden Temperatur in den umschlossenen Raum (300) zur Regelung der Umgebungstemperatur und zu dessen Inertisierung eingeleitet wird.

2. Inertisierungsverfahren nach Anspruch 1,
**dadurch gekennzeichnet, dass**
der kalte Produktgasteilstrom (162) vollständig oder teilweise und/oder zeitweise in den umschlossenen Raum (300) eingeleitet wird, wobei der umschlossene Raum (300) mittels des kalten Produktgasteilstroms (162) inertisiert wird und der kalte Produktgasteilstrom (162) gleichzeitig zur Kühlung des umschlossenen Raums (300) beiträgt.

3. Inertisierungsverfahren nach Anspruch 1 oder 2,
**dadurch gekennzeichnet, dass**
der warme Produktgasteilstrom (163) vollständig oder teilweise und/oder zeitweise in den aus mindestens einer Gastrennungseinheit (110,120, 410) entnommenen Nebenproduktgasstrom (151) eingeleitet wird.

4. Inertisierungsverfahren nach einem der vorhergehenden Ansprüche,
**dadurch gekennzeichnet, dass**
der warme Produktgasteilstrom (163) vollständig oder teilweise und/oder zeitweise mindestens einer Gastrennungseinheit (110,120, 410) zugeführt wird.

5. Inertisierungsverfahren nach einem der vorhergehenden Ansprüche,
**dadurch gekennzeichnet, dass**
der warme Produktgasteilstrom (163) vollständig oder teilweise und/oder zeitweise in den umschlossenen Raum (300) eingeleitet wird, wobei der umschlossene Raum (300) mittels des warmen, Produktgasteilstroms (163) inertisiert wird und der warme Produktgasteilstrom (163) gleichzeitig zur Erwärmung des umschlossenen Raums (300) beiträgt.

6. Inertisierungsverfahren nach einem der vorhergehenden Ansprüche,
**dadurch gekennzeichnet, dass**
der dem Wirbelrohr (200) entnommene kalte Produktgasteilstrom (162) und der dem Wirbelrohr (200) entnommene warme Produktgasteilstrom (163) vollständig oder teilweise und/oder zeitweise zu einem Mischproduktgasstrom zusammengeführt werden und dieser Mischproduktgasstrom dem umschlossenen Raum (300) zugeführt wird, wobei der umschlossene Raum (300) mittels des Mischproduktgasstroms inertisiert wird.

7. Inertisierungsverfahren nach einem der vorhergehenden Ansprüche,
**dadurch gekennzeichnet, dass**
der Produktgasstrom (161) innerhalb des Wirbelrohrs (200) zumindest teilweise kondensiert und das Kondensat abgeschieden wird.

8. Inertisierungsanlage (100) zur Erzeugung und Bereitstellung eines reaktionsträgen, insbesondere schwerentzündlichen Produktgasstroms (161), umfassend eine oder mehrere Gastrennungseinheiten (110, 120, 410), welche jeweils
- mit einer Gasgemischleitung (140) zur Zuführung eines Gasgemischstroms (141) in Leitungsverbindung stehen und fluidleitend verbindbar sind, wobei der Gasgemischstrom (141) zumindest einen Reaktivgasbestandteil und einen Inertgasbestandteil enthält, und wobei als Gasgemischstrom (141) Umgebungsluft verwendet wird, deren Reaktivgasbestandteil Sauerstoff und deren Inertgasbestandteil Stickstoff ist,
- ein zur Trennung des Reaktivgasbestandteils von dem Gasgemischstrom (141) geeignetes Trennmittel aufweisen und zur Trennung des Reaktivgasbestandteils von dem Gasgemischstrom (141) mit einem Druck beaufschlagbar sind,
- mit einer Produktgasleitung (160) zur Entnahme eines Produktgasstroms (161) in Leitungsverbindung stehen und fluidleitend verbindbar sind, wobei der Produktgasstrom (161) die von dem Gasgemischstrom (141) nicht getrennten und/oder nicht trennbaren Gasbestandteile enthält, und
- mit einer Nebenproduktgasleitung (150) zur Entnahme eines Nebenproduktgasstroms (151) in Leitungsverbindung stehen und fluidleitend verbindbar sind, wobei der Nebenproduktgasstrom (151) die von dem Gasgemischstrom (141) getrennten Reaktivgasbestandteile enthält,
**dadurch gekennzeichnet, dass**
die Inertisierungsanlage (100) ein Wirbelrohr (200) aufweist, welches in der Produktgasleitung (160) angeordnet ist, wobei die Produktgasleitung (160) zur Einleitung des aus der einen oder den mehreren Gastrennungseinheiten (110, 120, 410) entnommenen Produktgasstroms (161) in das Wirbelrohr (200) mündet, und wobei das Wirbelrohr (200) zur temperaturabhängigen Trennung und/oder Teilung des Produktgasstroms (161) ausgebildet ist und einen Kaltgasauslass (220) zur Entnahme und Bereitstellung eines kalten Produktgasteilstroms (162) sowie einen Warmgasauslass (230) zur Entnahme und Bereitstellung eines warmen Produktgasteilstroms (163) aufweist, und wobei der Kaltgasauslass (220) und der Warmgasauslass (230) des Wirbelrohrs (200) mit einem umschlossenen Raum (300), in Leitungsverbindung steht und fluidleitend verbindbar ist, sodass der kalte Produktgasteilstrom (162) und/oder der warme Produktgasteilstrom (163) zur Inertisierung des umschlossenen Raums (300) in diesen einleitbar ist.

9. Inertisierungsanlage (100) nach Anspruch 8,
**dadurch gekennzeichnet, dass**
der Warmgasauslass (230) des Wirbelrohrs (200) mit einer Verbindungsleitung (131, 132) in Leitungsverbindung steht und fluidleitend mit dieser verbindbar ist, sodass der warme Produktgasteilstrom (163) in die Verbindungsleitung (131, 132) einleitbar ist.

10. Inertisierungsanlage (100) nach einem der Ansprüche 8 oder 9,
**dadurch gekennzeichnet, dass**
der Warmgasauslass (230) des Wirbelrohrs (200) mit der Nebenproduktgasleitung (150) in Leitungsverbindung steht und fluidleitend mit dieser verbindbar ist, sodass der warme Produktgasteilstrom (163) in die Nebenproduktgasleitung (150) einleitbar ist.

11. Inertisierungsanlage (100) nach einem der Ansprüche 8 bis 10,
**dadurch gekennzeichnet, dass**
das Wirbelrohr (200) eine Kondensatfalle zur Abscheidung von bei der Trennung und/oder Teilung des Produktgasstroms (161) anfallendem Kondensat aufweist.

12. Inertisierungsanlage (100) nach einem der Ansprüche 8 bis 11,
**dadurch gekennzeichnet, dass**
das Wirbelrohr (200) ein Einstellmittel (240) zur Einstellung des Temperaturunterschieds zwischen dem warmen Produktgasteilstrom (163) und dem kalten Produktgasteilstrom (162) aufweist.

13. Verwendung einer Inertisierungsanlage (100), zur Inertisierung einer Kühlumgebung (300), wobei die Inertisierungsanlage (100) zur Erzeugung und Bereitstellung eines unter den in der Kühlumgebung (300) vorgegebenen Umgebungsbedingungen eine geringe Reaktivität aufweisenden, reaktionsträgen Produktgasstroms (161), eine oder mehrere Gastrennungseinheiten (110, 120, 410) aufweist, die mit einer Produktgasleitung (160) zur Entnahme des Produktgasstroms (161) in Leitungsverbindung stehen,
**dadurch gekennzeichnet, dass**
der Produktgasstrom (161) in ein Wirbelrohr (200) eingeleitet wird und innerhalb des Wirbelrohrs (200) in einen warmen Produktgasteilstrom (163) und in einen kalten Produktgasteilstrom (162) geteilt wird und anschließend der kalte Produktgasteilstrom (162) vollständig oder teilweise in die Kühlumgebung (300) eingeleitet wird.

## Claims

1. Inertisation method for use in an inertisation system (100) in accordance with claim 8, in particular for preventing fires, wherein an inert product gas flow (161), in particular ignition-resistant, deriving from a mixed gas flow (141), is produced, said mixed gas flow (141) containing at least one reactive gas constituent part and an inert gas constituent part, wherein
- ambient air is used as the mixed gas flow (141), of which the reactive gas constituent part is oxygen, and the inert gas constituent part is nitrogen,
- the mixed gas flow (141) is conveyed under the imposition of pressure to at least one gas separation unit (110, 120, 410), and the reactive gas constituent part is at least partially separated from the mixed gas flow (141) by means of a separation medium,
- the gas constituent parts which are not or cannot be separated from the mixed gas flow (141) are taken from the at least one gas separation unit (110, 120, 140) as a product gas flow (161), and
- the reactive gas constituent parts separated from the mixed gas flow (141) are taken from the at least one gas separation unit (110, 120, 140) as a by-product gas flow (151),
**characterized in that**
- the product gas flow (161) taken from the at least one gas separation unit (110, 120, 140) is conveyed into a vortex tube (200),
- inside the vortex tube (200) it is divided and/or separated into a hot product gas part flow (163) and into a cold product gas part flow (162), and
- the hot and/or the cold product gas part flow (162, 163) is introduced into the enclosed space (300) wholly or partially and/or from time to time at a temperature corresponding to the ambient temperature prevailing in an enclosed space (300), or optionally at a temperature contributing to the cooling or heating of the enclosed space (300), in order to regulate the ambient temperature and its inertisation.

2. inertisation method according to claim 1,
**characterized in that**
the cold product gas part flow (162) is introduced into the enclosed space (300) wholly or partially and/or from time to time, wherein the enclosed space (300) is inertised by means of the cold product gas part flow (162), and the cold product gas part flow (162) at the same time contributes to the cooling of the enclosed space (300).

3. inertisation method according to claim 1 or 2,
**characterized in that**
the hot product gas part flow (163) is introduced wholly or partially and/or from time to time into the by-product gas flow (151) taken from the at least one gas separation unit (110, 120, 410).

4. inertisation method according to any one of the preceding claims,
**characterized in that**
the hot product gas part flow (163) is conveyed wholly or partially and/or from time to time to at least one gas separation unit (110, 120, 410).

5. Inertisation method according to any one of the preceding claims,
**characterized in that**
the hot product gas part flow (163) is introduced into the enclosed space (300) wholly or partially and/or from time to time, wherein the enclosed space (300) is inertised by means of the hot product gas part flow (163), and the hot product gas part flow (163) at the same time contributes to the heating of the enclosed space (300).

6. inertisation method according to any one of the preceding claims,
**characterized in that**
the cold product gas part flow (162) taken from the vortex tube (200) and the hot product gas part flow (163) taken from the vortex tube (200) are merged wholly or partially and/or from time to time to form a mixed product gas flow, and this mixed product gas flow is conveyed to the enclosed space (300), wherein the enclosed space (300) is inertised by means of the mixed product gas flow.

7. inertisation method according to any one of the preceding claims,
**characterized in that**
inside the vortex tube (200), the product gas flow (161) is at least partially condensed and the condensate is precipitated out.

8. inertisation system (100) for producing and providing an inert product gas flow (161), in particular ignition-resistant, comprising one or more gas separation units (110, 120, 410) which in each case
- are in a line connection, and can be connected in a fluid conveying manner, to a gas mixture line (140) for conveying a gas mixture flow (141), wherein the gas mixture flow (141) contains at least one reactive gas constituent part and an inert gas constituent part, and wherein ambient air is used as the gas mixture flow (141), of which the reactive gas constituent part is oxygen and the inert gas constituent part is nitrogen,
- comprise a separating means which is suitable for separating the reactive gas constituent part from the gas mixture flow (141), and, in order to separate the reactive gas constituent part from the gas mixture flow (141), can be subjected to pressure,
- are in line connection with a product gas line (160) for drawing a product gas flow (161), and can be connected in a fluid conveying manner, wherein the product gas flow (161) contains the gas constituent parts which are not separated and/or cannot be separated from the gas mixture flow (141), and
- are in line connection with a by-product gas line (150) for drawing a by-product gas flow (151), and can be connected in a fluid conveying manner, wherein the by-product gas flow (151) contains reactive gas constituent parts separated from the gas mixture flow (141),
**characterized in that**
the inertisation system (100) comprises a vortex tube (200), which is arranged in the product gas line (160), wherein, in order to introduce the product gas flow (161) taken from one or more gas separation units (110, 120, 410), the product gas line (160) opens into the vortex tube (200), and wherein the vortex tube (200) is configured for the temperature-dependent separation and/or dividing of the product gas flow (161), and comprises a cold gas outlet (220) for removing and providing a cold product gas part flow (162) as well as a hot gas outlet (230) for removing and providing a hot product gas part flow (163), and wherein the cold gas outlet (220) and the hot gas outlet (230) of the vortex tube (200) is in line connection with an enclosed space (300), and can be connected in a fluid conveying manner, such that the cold product gas part flow (162) and/or the hot product gas part flow (163) can be conveyed into this for the inertisation of the enclosed space (300).

9. inertisation system (100) according to claim 8,
**characterized in that**
the hot gas outlet (230) of the vortex tube (200) is in line connection with a connection line (131, 132), and can be connected to it in a fluid conveying manner, such that the hot product gas part flow (163) can be introduced into the connection line (131, 132).

10. Inertisation system (100) according to any one of claims 8 or 9,
**characterized in that**
the hot gas outlet (230) of the vortex tube (200) is in line connection with the by-product gas line (150) and can be connected to it in a fluid conveying manner, such that the hot product gas part flow (163) can be introduced into the by-product gas line (150).

11. inertisation system (100) according to any one of claims 8 to 10,
**characterized in that**
the vortex tube (200) comprises a condensate trap for precipitating the condensate incurred during the separating and/or dividing of the product gas flow (161).

12. inertisation system (100) according to any one of claims 8 to 11,
**characterized in that**
the vortex tube (200) comprises an adjustment means (240) for adjusting the temperature difference between the hot product gas part flow (163) and the cold product gas part flow (162).

13. Use of an inertisation system (100) for inertising a cold environment (300), wherein, in order to create and provide an inert product gas flow (161) which exhibits low reactivity under the ambient conditions specified in the cold environment (300), the inertisation system (100) comprises one or more gas separation units (110, 120, 410), which are in line connection with a product gas line (160) for removing the product gas flow (161),
**characterized in that**
the product gas flow (161) is introduced into a vortex tube (200), and inside the vortex tube (200) is divided into a hot product gas part flow (163) and into a cold product gas part flow (162), and the cold product gas part flow (162) is then introduced wholly or partially into the cold environment (300).

## Revendications

1. Procédé d'inertisation pour une mise en oeuvre dans une installation d'inertisation (100) selon la revendication 8, en particulier pour éviter un incendie, dans lequel un flux de gaz produit (161) inerte, en particulier difficilement inflammable, est produit à partir d'un flux de mélange gazeux (141), lequel flux de mélange gazeux (141) contient au moins un composant gazeux réactif et au moins un composant gazeux inerte, dans lequel
- on utilise comme flux de mélange gazeux (141) de l'air ambiant dont le composant gazeux réactif est l'oxygène et dont le composant gazeux inerte est l'azote,
- le flux de mélange gazeux (141) est amené sous pression à au moins une unité de séparation de gaz (110, 120, 410) et le composant gazeux réactif est au moins partiellement séparé du flux de mélange gazeux (141) au moyen d'un agent de séparation,
- les composants gazeux qui ne sont pas séparés et/ou qui ne peuvent pas être séparés du flux de mélange gazeux (141) sont prélevés de ladite au moins une unité de séparation de gaz (110, 120, 410) en tant que flux de gaz produit (161), et
- les composants gazeux réactifs séparés du flux de mélange gazeux (141) sont prélevés de ladite au moins une unité de séparation de gaz (110, 120, 410) en tant que flux de sous-produit gazeux (151),
**caractérisé en ce que**
- le flux de gaz produit (161) prélevé de ladite au moins une unité de séparation de gaz (110, 120, 410) est introduit dans un tube à tourbillon (200),
- est divisé et/ou séparé à l'intérieur du tube à tourbillon (200) en un flux partiel de gaz produit chaud (163) et en un flux partiel de gaz produit froid (162), et
- le flux partiel de gaz produit chaud et/ou froid (162, 163) est introduit entièrement ou partiellement et/ou temporairement dans l'espace confiné (300) soit à une température correspondant à la température d'ambiance présente dans un espace confiné (300) soit, au choix, à une température contribuant au refroidissement ou au réchauffement de l'espace confiné (300), pour la régulation de sa température d'ambiance et pour son inertisation.

2. Procédé d'inertisation selon la revendication 1,
**caractérisé en ce que**
le flux partiel de gaz produit froid (162) est introduit entièrement ou partiellement et/ou temporairement dans l'espace confiné (300), l'espace confiné (300) étant inertisé au moyen du flux partiel de gaz produit froid (162), et le flux partiel de gaz produit froid (162) contribuant simultanément au refroidissement de l'espace confiné (300).

3. Procédé d'inertisation selon la revendication 1 ou 2,
**caractérisé en ce que**
le flux partiel de gaz produit chaud (163) est entièrement ou partiellement et/ou temporairement introduit dans le flux de sous-produit gazeux (151) prélevé de ladite au moins une unité de séparation de gaz (110, 120, 410).

4. Procédé d'inertisation selon l'une quelconque des revendications précédentes,
**caractérisé en ce que**
le flux partiel de gaz produit chaud (163) est introduit en totalité ou en partie et/ou temporairement dans ladite au moins une unité de séparation de gaz (110, 120, 410).

5. Procédé d'inertisation selon l'une quelconque des revendications précédentes,
**caractérisé en ce que**
le flux partiel de gaz produit chaud (163) est introduit totalement ou partiellement et/ou temporairement dans l'espace confiné (300), l'espace confiné (300) étant inertisé au moyen du flux partiel de gaz produit chaud (163), et le flux partiel de gaz produit chaud (163) contribuant simultanément au chauffage de l'espace confiné (300).

6. Procédé d'inertisation selon l'une quelconque des revendications précédentes,
**caractérisé en ce que**
le flux partiel de gaz produit froid (162) prélevé dans le tube à tourbillon (200) et le flux partiel de gaz produit chaud (163) prélevé dans le tube à tourbillon (200) sont introduits totalement ou partiellement et/ou temporairement en un flux de gaz produit mélangé et ce flux de gaz produit mélangé est introduit dans l'espace confiné (300), l'espace confiné (300) étant inertisé au moyen du flux de gaz produit mélangé.

7. Procédé d'inertisation selon l'une quelconque des revendications précédentes,
**caractérisé en ce que**
le flux de gaz produit (161) est au moins partiellement condensé à l'intérieur du tube à tourbillon (200) et le condensat est séparé.

8. Installation d'inertisation (100) pour la production et la mise à disposition d'un flux de gaz produit (161) inerte, en particulier difficilement inflammable, comprenant une ou plusieurs unités de séparation de gaz (110, 120, 410), qui respectivement
- sont en liaison de conduction et peuvent être reliées de manière fluidique avec une conduite de mélange gazeux (140) pour l'amenée d'un flux de mélange gazeux (141), le flux de mélange gazeux (141) contenant au moins un composant gazeux réactif et un composant gazeux inerte, et dans lequel on utilise comme flux de mélange gazeux (141) de l'air ambiant dont le composant gazeux réactif est l'oxygène et dont le composant gazeux inerte est l'azote,
- comprennent un agent de séparation approprié pour séparer le composant gazeux réactif du flux de mélange gazeux (141) et peuvent être soumises à une pression pour séparer le composant gazeux réactif du flux de mélange gazeux (141),
- sont en liaison de conduction et peuvent être reliées de manière fluidique avec une conduite de gaz produit (160) pour le prélèvement d'un flux de gaz produit (161), le flux de gaz produit (161) contenant les composants gazeux qui ne sont pas séparés et/ou ne peuvent pas être séparés du flux de mélange gazeux (141), et
- sont en liaison de conduction et peuvent être reliées de manière fluidique avec une conduite de sous-produits gazeux (150) pour prélever un flux de sous-produits gazeux (151), le flux de sous-produits gazeux (151) contenant les composants gazeux réactifs séparés du flux de mélange gazeux (141),
**caractérisée en ce que**
l'installation d'inertisation (100) comprend un tube à tourbillon (200) qui est disposé dans la conduite de gaz produit (160), la conduite de gaz produit (160) débouchant dans le tube à tourbillon (200) pour l'introduction du flux de gaz produit (161) prélevé de l'une ou des plusieurs unités de séparation de gaz (110, 120, 410), et le tube à tourbillon (200) étant conçu pour la séparation et/ou la division du flux de gaz produit (161) en fonction de la température et comportant une sortie de gaz froid (220) pour le prélèvement et la mise à disposition d'un flux partiel de gaz produit (162) froid ainsi qu'une sortie de gaz chaud (230) pour le prélèvement et la mise à disposition d'un flux partiel de gaz produit chaud (163), et la sortie de gaz froid (220) et la sortie de gaz chaud (230) du tube à tourbillon (200) étant en liaison de conduction et pouvant être reliées de manière fluidique avec un espace confiné (300), de sorte que le flux partiel de gaz produit froid (162) et/ou le flux partiel de gaz produit chaud (163) peut être introduit dans l'espace confiné (300) pour l'inertisation de celui-ci.

9. Installation d'inertisation (100) selon la revendication 8,
**caractérisée en ce que**
la sortie de gaz chaud (230) du tube à tourbillon (200) est en liaison de conduction et peut être reliée de manière fluidique avec une conduite de raccordement (131, 132), de sorte que le flux partiel de gaz produit chaud (163) peut être introduit dans la conduite de raccordement (131, 132).

10. Installation d'inertisation (100) selon l'une des revendications 8 ou 9,
**caractérisée en ce que**
la sortie de gaz chaud (230) du tube à tourbillon (200) est en liaison de conduction et peut être reliée de manière fluidique avec la conduite de sous-produits gazeux (150), de sorte que le flux partiel de gaz produit chaud (163) peut être introduit dans la conduite de sous-produit gazeux (150).

11. Installation d'inertisation (100) selon l'une quelconque des revendications 8 à 10,
**caractérisée en ce que**
le tube à tourbillon (200) comporte un piège à condensats pour séparer les condensats produits lors de la séparation et/ou de la division du flux de gaz produit (161).

12. Installation d'inertisation (100) selon l'une quelconque des revendications 8 à 11,
**caractérisée en ce que**
le tube à tourbillon (200) comprend un moyen de réglage (240) pour régler la différence de température entre le flux partiel de gaz produit chaud (163) et le flux partiel de gaz produit froid (162).

13. Utilisation d'une installation d'inertisation (100) pour l'inertisation d'un environnement de refroidissement (300), l'installation d'inertisation (100) comprenant une ou plusieurs unités de séparation de gaz (110, 120, 410) pour générer et mettre à disposition un flux de gaz produit (161) inerte présentant une faible réactivité dans les conditions régnant dans l'environnement de refroidissement (300), lesquelles unités étant en liaison de conduction avec une conduite de gaz produit (160) pour le prélèvement du flux de gaz produit (161),
**caractérisée en ce que**
le flux de gaz produit (161) est introduit dans un tube à tourbillon (200) et est divisé à l'intérieur du tube à tourbillon (200) en un flux partiel de gaz produit chaud (163) et en un flux partiel de gaz produit froid (162), et ensuite le flux partiel de gaz produit froid (162) est introduit entièrement ou partiellement dans l'environnement de refroidissement (300).
